# EUROPEAN PATENT SPECIFICATION

(11) **EP 2 454 934 B1**
(45) Date of publication and mention of the grant of the patent: **12.11.2014**
(21) Application number: 10799444.4
(22) Date of filing: 16.07.2010
(51) Int. Cl.: B27B 17/00, B27B 17/02, A01G 3/08

(54) **VEGETATION TRIMMER**
PFLANZENSCHNEIDER
APPAREIL DE COUPE DE VÉGÉTATION

(30) Priority: 17.07.2009 CN 200910161624
(43) Date of publication of application: 23.05.2012
(73) Proprietor: Positec Power Tools (Suzhou) Co., Ltd, Suzhou, Jiangsu 215123 (CN)
(72) Inventor: BROWN, Warren, Mount Evelyn Victoria 3796 (AU); SZOMMER, Harry, Carrum Downs Victoria 3201 (AU); GERHARDT, Graham, Warrandyte Victoria 3133 (AU)
(74) Representative: Stuttard, Garry Philip
(86) International application number: PCT/CN2010/075212
(87) International publication number: WO 2011/006446

(56) References cited:
- WO-A1-2010/094239
- CN-A- 1 860 844
- CN-A- 1 891 028
- CN-U- 201 479 651
- DE-U1- 29 710 381
- US-A- 3 731 380
- US-A- 4 760 646
- US-A- 4 884 340
- US-A- 5 013 282
- US-A- 6 148 524
- US-A1- 2005 022 388
- US-A1- 2005 022 388
- US-B2- 6 651 347

## Description

### Technical Field

The present invention relates to a vegetation pruning device, as per the preamble of claim 1. An example of such a pruning device is disclosed by US 7 152 328 B.

### Background of The Invention

There are considerable array of tools available for the modem gardeners. For example, shears are used to pruning or cutting "light" vegetation such as grass or leaves or twigs etc.. Hedge trimmers and chain saws are used to cutting "heavy" vegetation such as trees.

A traditional chain saw comprises a cutting head. The cutting head comprises a flexible chain and a guide bar for supporting the flexible chain. The flexible chain is driven by a motor received in a motor housing and runs along the peripheral of the guide bar. A traditional chain saw further comprises a main handle positioned behind the cutting head, an assistant handle positioned between the cutting head and the main handle. During cutting, the cutting head is driven by the motor and the flexible chain runs along the peripheral of the guide bar, the guide bar does not move with respect to the motor housing. In operation, one hand of the operator grasps the main handle, and the other hand of the operator grasps the assistant handle, the operator should press the saw toward the cutting direction to ensure smoothly cutting. When the cutting direction is from up to down, operating of the traditional chain saw will be not so hard for the gravity of the saw. But if the cutting is from down to up or from left side to right side, operating of the traditional saw will be very hard and need great effort.

U.S. Published Patent Application No. 2005/0022388A1 discloses a vegetation pruning device. The vegetation pruning device comprises a cutting head. The cutting head comprises a flexible chain and a guide bar for supporting the flexible chain. The flexible chain is driven by a motor and running around the guide bar. The vegetation pruning device further comprises a pair of pivotally coupled arms. The pivotally coupled arms rotate about a fixed axis. The cutting head is connected to one of the arm and can pivot together with the arm around the fixed axis relative to the other arm. Each arm is connected with a handle portion for the operator to grip. In use, the operator moves the handle portions close to each other, the arms will move close correspondingly, thereby the cutting work can be proceed. But this kind of vegetation pruning device makes that in some instance the operation is not so comfortable. For example, when you need to cut branch of high trees, it's hard to make such a cutting with this kind of vegetation pruning device. In other instance, such as cutting wood placed on the floor, the operator should bow, if the operating last long, it is very easy to feel exhaust.

In other instance, the traditional chain saw generally comprises an extending rod for cutting branch of high trees, the extending rod is detachable fixed with the main handle of the chain saw. In operation, the operator grapes the extending rod with two handles, it's hard to apply the force to the direction of the cutting for the operator; it's hard to make such a cutting with this kind of vegetation pruning device.

U.S. Published Patent Issue No. 7152328B2 discloses a vegetation pruning device. The vegetation pruning device comprises a cutting head, a main handle and an extending rod. When the operator need to cut branch of high trees, it's necessary to attach the extending rod to the main handle and make the extending rod and the main handle electrically coupled. In operation, the operator grapes the extending rod with two handles, it's hard to apply the force to the direction of the cutting for the operator, so it's hard to make such a cutting with this kind of vegetation pruning device.

### Summary of The Invention

It is an object of the present invention to provide a vegetation pruning device with improved operability.

To solve above problem, the present invention provides a vegetation pruning device comprising:
a main body;
a cutting element;
a guide bar for supporting the cutting element;
a motor for driving the cutting element;
a first handle assembly;
a second handle assembly;
a locking mechanism for detachably securing the second handle assembly to the first handle assembly; and
a connecting mechanism positioned between the first handle assembly and the guide bar, characterized in that each of the first handle assembly and the second handle assembly is operable to move linearly towards or away from the guide bar, and the connecting mechanism is provided to change the linear movement of the first or the second handle assembly to the pivoting of the guide bar.

At present invention, both of the first handle assembly and the second handle assembly are moving linearly, which makes the operator feel comfortable in any working instance.

Advantageously, the vegetation pruning device comprises a support wall for pressing against a work piece to be cut.

Advantageously, the vegetation pruning device comprises a U-shaped guard. the U-shaped guard comprises an inner edge and a U-shaped jaw for detachably mounting on the inner edge.

Advantageously, the U-shaped jaw comprises an inner side and a plurality of teeth arranged on the inner side.

Advantageously, the U-shaped jaw is made of steel.

Advantageously, the first handle assembly comprises a guiding portion, and the main body comprises a handle receiving chamber for receiving the guiding portion, the handle receiving chamber having a longitudinal axis, the guiding portion being operable to move linearly along the longitudinal axis of the handle receiving chamber.

Advantageously, the first handle assembly further comprises a first gripping portion which is configured as D-shaped.

Advantageously, the first gripping portion comprises a gripping side configured as straight-lined and a connecting side configured as curve -shaped, the connecting side securing the first gripping portion to the guiding portion.

Advantageously, a safety switch is symmetrically attached to both ends of the gripping side.

Advantageously, a control switch is arranged in the inner part of the gripping side.

Advantageously, the connecting mechanism is configured as a planar multi-rod mechanism.

Advantageously, the planar multi-rod mechanism comprises driving part, a connecting part and a driven part, the driving part being acted by the first handle assembly, the driven part being fixedly attached to the guide bar, the connecting part being interposed between the driving part and the driven part and is hinged to the driving part and the driven part, respectively.

Advantageously, the connecting part comprises a first connecting rod hinged to the driving part, a second connecting rod having two ends hinged to the first connecting rod at one end and coupled to the main body pivotally at the other end, and a third connecting rod having two ends hinged to a middle portion of the second connecting rod at one end and hinged to the driven part at the other end.

Advantageously, a torsion spring having two ends is arranged between the main body and the driven part, one end of the torsion spring being fixed with the main body, the other end of the torsion spring being fixed with the driven part.

Advantageously, the vegetation pruning device further comprises a limiting mechanism for preventing the guide bar rotating to excess. The limiting mechanism comprises a groove formed on the main body and a projected column fixed with the guide bar, the groove comprising a first block face and a second block face formed at two ends of the groove respectively, the projected column being operable to couple with the first block face or the second block face.

Advantageously, the groove is configured as waist-shaped.

Advantageously, the vegetation pruning device further comprises a motor bracket for supporting the motor, the projected column extend from the motor bracket and penetrated the groove.

Advantageously, the limiting mechanism further comprises three waist-shaped grooves formed along a circumference at equal interval and three projected columns formed along the circumference at equal interval, the three projected columns penetrating the three waist-shaped grooves respectively.

Advantageously, the second handle assembly comprises a second gripping portion and an extending portion having two ends, the first end of the extending portion secured to the second gripping portion, the second end of the extending portion secured to the first handle assembly, the locking mechanism being positioned between the second end of the extending portion and the first handle assembly.

Advantageously, the second handle assembly comprises a second gripping portion and an extending portion, the second gripping portion being configured as D-shaped.

Advantageously, the first handle assembly comprises a first gripping portion having a receiving opening, and the locking mechanism comprises a locking bracket detachable received in the receiving opening.

Advantageously, the locking bracket comprises a first matched face, and the first gripping portion of the first handle assembly comprising a second matched face arranged at one side of the first handle assembly for coupling with the first matched face, the first matched face and the second matched face being the shape-matched.

Advantageously, the locking mechanism further comprises a locking knob being operable to lock the first gripping portion of the first handle assembly between the locking bracket and the locking knob.

Advantageously, the first gripping portion of the first handle assembly further comprises a third matched face, and the locking knob comprises a fourth matched face being selective to couple with the third matched face.

Advantageously, the first handle assembly comprises a guiding portion, a C-shaped bracket detachable secured on the guiding portion, and the main body comprises a longitudinal slot, the C-shaped bracket extending outward from the longitudinal slot and moving along with the longitudinal slot, the second handle assembly comprising an extending portion supported on the C-shaped bracket.

Advantageously, a plug is arranged on one of the first handle assembly and the second handle assembly, and a socket is arranged on the other of the first handle assembly and the second handle assembly, the first handle assembly being electrically coupled with the second handle assembly when the plug connected with the socket.

Advantageously, the vegetation pruning device further comprises a sleeve being slidable mounting on the second handle assembly, and a cord having two ends coupled with the main body with one end and coupled with the sleeve with another end.

Advantageously, the main body comprises a cliphook, one end of the cord is fastened on the cliphook.

Advantageously, the sleeve comprises a flexible cam clip which is operable to clamp the cord.

Advantageously, the vegetation pruning device further comprises an operating assembly having a control unit movable mounting on the second handle assembly and a joint unit detachably coupling with the main body.

Advantageously, the second handle assembly comprises a second gripping portion and an outer tube coupled with the first handle assembly.

Advantageously, the joint unit comprises an inner tube coupled with the outer tube, the inner tube comprising two ends, one end of the inner tube extending into the outer tube, the other end of the inner tube extending out the outer tube and coupling with the main body.

Advantageously, the control unit comprises a sleeve mounted on the outer tube and fixed with the inner tube, and the outer tube comprising a longitudinal opening, the sleeve being capable of sliding along the longitudinal opening with respect to the outer tube.

Advantageously, the main body comprises an opening, and the inner tube comprises a joint member having a cooperating part selectively engaged with the opening of the main body.

Advantageously, the second gripping portion of the second handle assembly is configured as D-shaped.

Advantageously, the first handle assembly comprises a first gripping portion having a control switch, and the locking mechanism comprises a first receiving chamber, the first gripping portion is locked in the first receiving chamber.

Advantageously, the locking mechanism comprises a base and a cover coupled with the base pivotally, and a locking member being selective to lock the cover on the base.

Advantageously, the locking member comprises a locking knob arranged on the cover, a locking pin fixed on the locking knob, and a clip attached to the locking pin, and the base comprises an opening having an inner wall with a ramp formed thereon, the clip being operable to engage and lock with the ramp along with the rotating of the locking member.

Advantageously, the base of the locking mechanism further comprises a second receiving chamber, and the outer tube comprises a first end connected with the second gripping portion of the second handle assembly and a second end received in the second receiving chamber of the locking mechanism.

### Brief Description of The Drawings

FIG.1 is a perspective view of a chain saw of the type disclosed in WO-A-2010/094239 provided for illustrative purposes only.
FIG.2 shows schematically the internal mechanism of the chain saw according to FIG 1.
FIG.3 is an exploded view of the main body of the chain saw according to FIG.1.
FIG.4 is a perspective view of the first half housing of the main body of the chain saw according to FIG.3.
FIG.5 is a perspective view of the second half housing of the main body of the chain saw according to FIG.3.
FIG.6 is a perspective view of the driven part of the chain saw according to FIG.2.
FIG.7 shows principle diagram of the transmission mechanism the chain saw according to FIG.1.
FIG.8 is a perspective view of the limiting mechanism of the chain saw according to FIG.1.
FIG.9 is a schematic view of the chain saw in unused status according to FIG.1.
FIG.10 is a schematic view of the chain saw during operating status according to FIG.9.
FIG.11 is s a schematic view of the chain saw in an operating status near to end according to FIG.1.
FIG.12 is a perspective view of a chain saw according to a first embodiment of the invention connected with the second handle assembly.
FIG. 13 is a partial enlarged view of the locking mechanism of the second handle assembly according to FIG.12.
FIG.14 is a partial exploded view of the chain saw when the second handle assembly un-connected with the first handle assembly of the chain saw according to FIG.12.
FIG.15 is a partial exploded view of the locking mechanism of the chain saw according to FIG. 12.
FIG.16 is a schematic view of the locking mechanism when the locking knobs of the locking mechanism located at the first position according to FIG. 12.
FIG.17 is a schematic view of the locking mechanism when the locking knobs of the locking mechanism located at the second position according to FIG.12.
FIG. 18 is a perspective view of the C-shaped bracket of the chain saw according to FIG.12.
FIG.19 is a partial perspective view of the chain saw with a cord according to FIG.12.
FIG.20 is a front view of the second handle assembly accordance with the second embodiment of the present invention.
FIG.21 is a cross-sectional view when look down according to FIG.20.
FIG.22 is a exploded view of the second handle assembly according to FIG.20.
FIG.23 is a perspective view of the locking mechanism of the chain saw during opening status according to FIG.20.
FIG.24 is a perspective view of the chain saw accordance with the third embodiment of the present invention.
FIG.25 is a partial enlarged view of the portion marked with I of the chain saw according to FIG.24.
FIG.26 is a perspective view of the chain saw with another second handle assembly according to FIG.24.

### DETAILED DESCRIPTION OF THE INVENTION

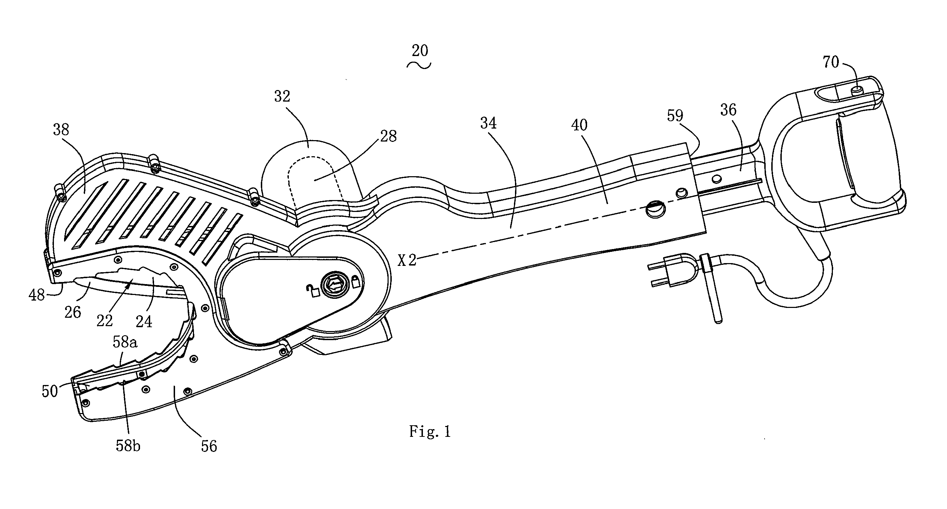

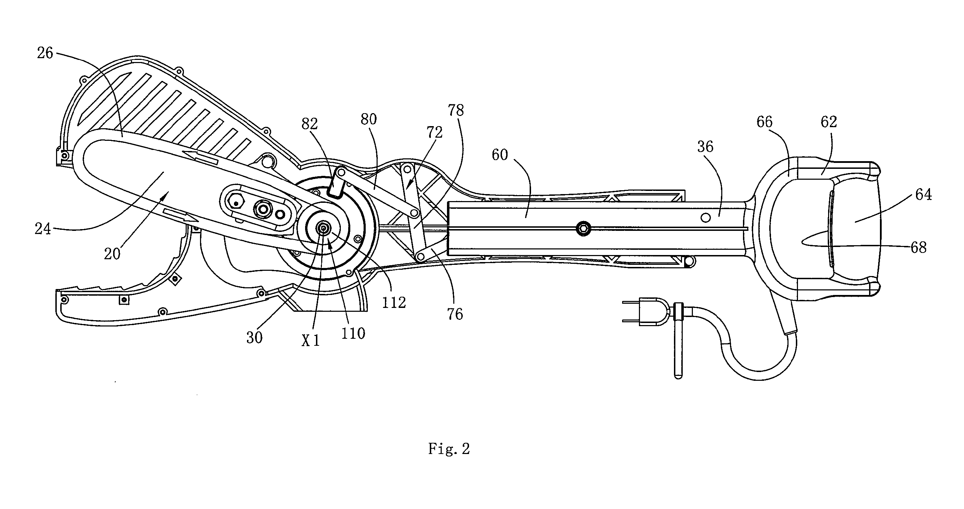

Figures 1 and 2 show a vegetation pruning device which is not part of the invention but which with the accompanying description is useful for understanding the invention. The vegetation pruning device is a chainsaw 20 comprises a working head 22 that includes a guide bar 24 and a cutting element installed on the guide bar 24. The cutting element is a flexible chain 26 that is installed on the periphery of the guide bar 24 and capable of rotating around the guide bar 24. The plane on which the guide bar 24 exists is a guide bar plane. Alternatively the working head may be a circular blade or a saw blade of a reciprocating saw. If the working head is the circular blade, the cutting element may be regarded as the cutting part of the circular blade, and the guide bar may be regarded as the central supporting part of the circular blade. If the working head is the saw blade of the reciprocating saw, the cutting element may be regarded as the cutting blade part of the saw blade of the reciprocating saw, and the guide bar may be regarded as the supporting part of the cutting blade part of the saw blade of the reciprocating saw.

The chainsaw 20 also comprises a motor 28 for driving the working head 22 so that the flexible chain 26 rotates around the guide bar 24. The motor 28 has a motor output shaft 30 with an axis X1, and the motor output shaft 30 rotates around its axis X1 to drive the flexible chain 26 to rotate around the guide bar 24. The motor 28 is cased in a motor housing 32.

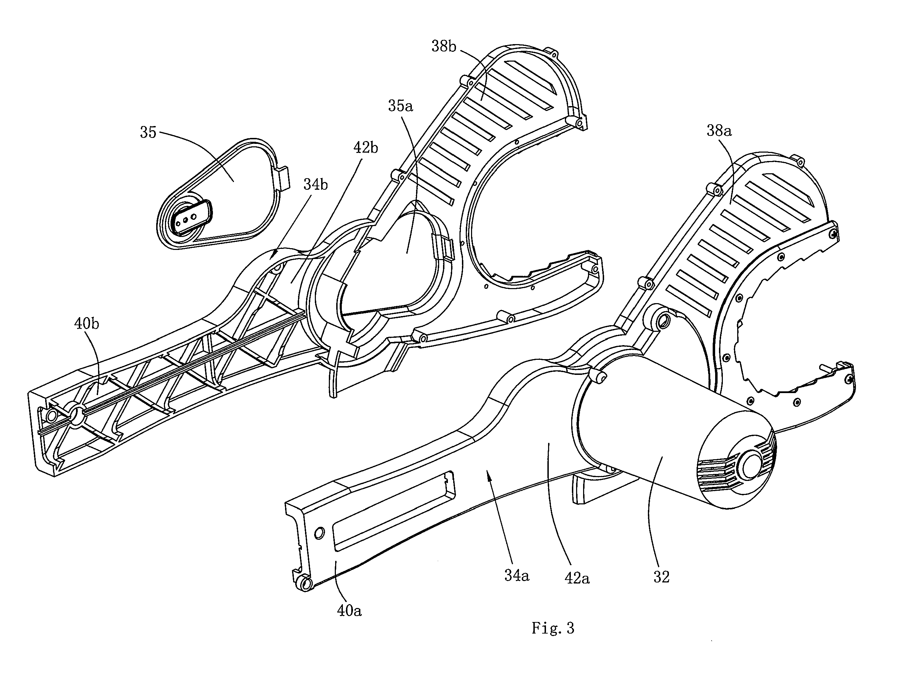

Furthermore, as shown in figure 3, the chainsaw comprises a main body 34. The main body 34 consists of two semi-housings, namely a first semi-housing 34a and a second semi-housing 34b, which are detachably connected via screws. Alternatively the first semi-housing 34a and the second semi-housing 34b may be connected by other methods capable of being mastered by common skilled persons in this field, such as integral connection, wedge connection, etc. The motor housing 32 is detachably connected to the first semi-housing 34a. The motor housing 34a is connected to the first semi-housing 34a via screws. Alternatively the motor housing 34a may also be fixedly connected with the first semi-housing 34a, for example: the motor housing 32 and the first semi-housing 34a are integrated.

The saw chain 20 comprises a housing cover 35, and the second semi-housing 34b has an access hole 35a so that a user is capable of replacing the flexible chain 26 conveniently. The housing cover 35 is detachably installed on the access hole 35a. The housing cover 35 is fixedly connected to the second semi-housing 34b via a bolt. Alternatively the housing cover 35 may also be connected to the second semi-housing 34b in other manners that are capable of being mastered by common skilled persons in this field. When the flexible chain 26 is not required to be replaced, the housing cover 35 covers the access hole 35a. When the flexible chain 26 is required to be replaced, the user is capable of dismounting the housing cover 35 from the second semi-housing 34b with tools, such as a wrench.

The chainsaw 20 comprises a first handle assembly 36 (as shown in figure 1) for being held and operated by an operator while working. As shown in figure 3, the first semi-housing 34a comprises a first working head receiving end 38a, a first handle receiving end 40a and a first connection portion 42a for connecting the first working head receiving end 38a and the first handle receiving end 40a. The second semi-housing 34b comprises a second working head receiving end 38b, a second handle receiving end 40b and a second connection portion 42b for connecting the second working head receiving end 38b and the second handle receiving end 40b.

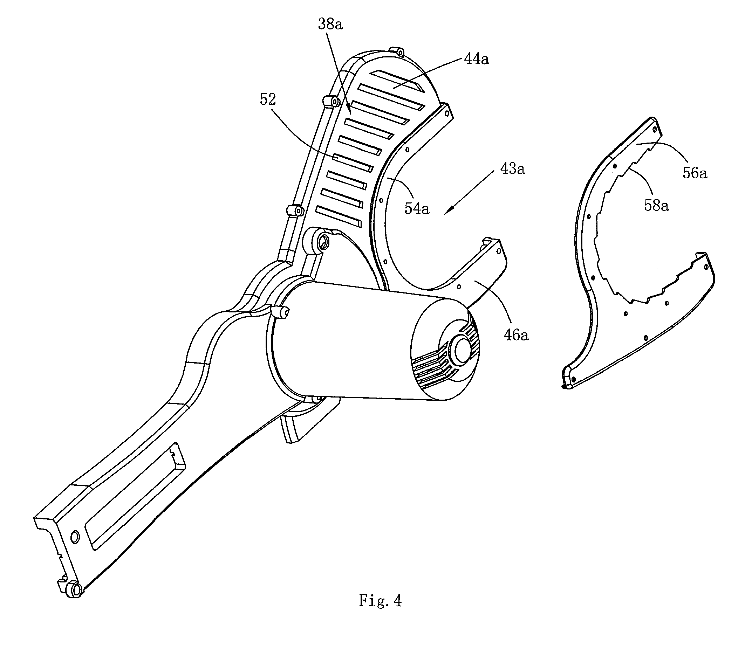

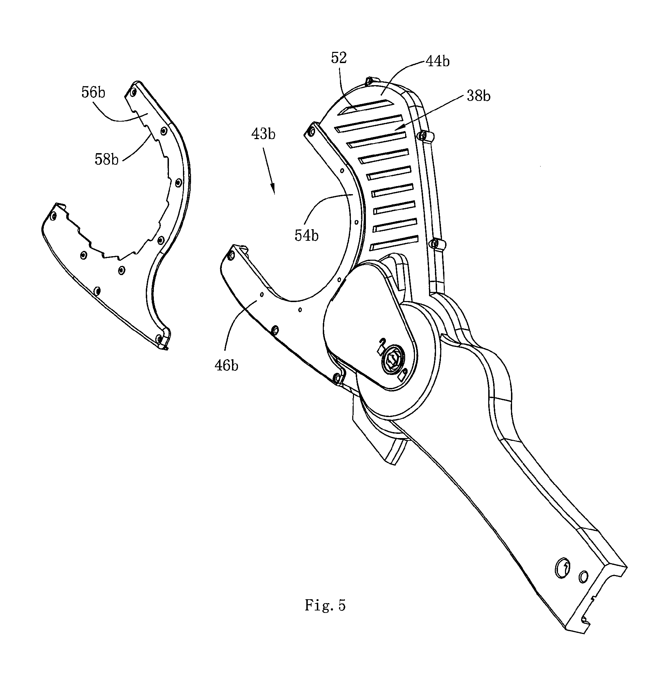

As shown in figures 4 and 5, the first working head receiving end 38a and the second working head receiving end 38b are approximately U-shaped. The first working head receiving end 38a has a first U-shaped opening 43a. The second working head receiving end 38b has a second U-shaped opening 43b.

The first working head receiving end 38a and the second working head receiving end 38b together form a U-shaped guard38 (as shown in figure 1) of the chainsaw, and the U-shaped guard38 is used for receiving the working head 22.

The first working head receiving head 38a comprises a first upper side wall 44a and a first lower side wall 46a which defines the first U-shaped opening 43a there-between. The second working head receiving end 38b comprises a second upper side wall 44b and a second lower side wall 46b which defines the second U-shaped opening 43b there-between.

A first receiving chamber 48 (as shown in figure 1) is formed between the first upper side wall 44a and the second upper side wall 44b. A second receiving chamber 50 (as shown in figure 1) is formed between the first lower side wall 44a and the second lower side wall 46b. The first receiving chamber 48 and the second receiving chamber 50 are used for receiving the working head 22. The first upper side wall 44a and the second upper side wall 44b respectively has a plurality of openings 52 through which the operator is capable of clearly observing the current position of the working head.

The first working head receiving end 38a has a first U-shaped inner edge 54a that is circularly located on the inside of the first working head receiving end 38a, specifically located on one side of the first working head receiving end 38a close to the first U-shaped opening 43a, and a first U-shaped jaw 56a is detachably arranged on the first U-shaped inner edge 54a. A ring of teeth 58a are arranged on the inside of the first U-shaped jaw 56a. The first U-shaped jaw 56a is made of steel. The first U-shaped jaw 56a is connected to the first U-shaped inner edge 54a via rivets.

The second working head receiving end 38b has a second U-shaped inner edge 54b that is circularly located on the inside of the second working head receiving end 38b, specifically located on one side of the second working head receiving end 38b close to the second U-shaped opening 43b, and a second U-shaped jaw 56b is detachably arranged on the second U-shaped inner edge 54b. A ring of teeth 58b are arranged on the inside of the second U-shaped jaw 56b. The second U-shaped jaw 56b is made of steel. The second U-shaped jaw 56b is connected to the second U-shaped inner edge 54b via the rivets.

The first U-shaped inner edge 54a and the second U-shaped inner edge 54b together form the U-shaped inner edge 54 of the U-shaped guard 38. The first U-shaped jaw 56a and the second U-shaped jaw 56b together form the U-shaped jaw 56 of the U-shaped guard38. The U-shaped jaw 56 of the U-shaped guard38 is detachably connected to the U-shaped inner edge 54 of the U-shaped guard38. The mentioned U-shaped jaw 56 is capable of being used as a supporting wall for pressing against a work piece to be cut while working. Teeth 58a and teeth 58b are circularly arranged on the inside of the U-shaped jaw 56. The purpose of the arrangement of the teeth 58a and theteeth58b is to ensure that the U-shaped jaw 56 with teeth are capable of reliably supporting slim twigs and preventing them from popping out in the process of cutting operation.

As shown in figures 1 and 3, the motor housing 32 is connected to the first connection portion 42a of the first semi-housing 34a via screws. The first handle receiving end 40a of the first semi-housing 34a and the second handle receiving end 40b of the second semi-housing 34b both extend longitudinally and are connected via screws. The first handle receiving end 40a of the first semi-housing 34a and the second handle receiving end 40b of the second semi-housing 34b together form a handle receiving end 40 of the main body 34.

The handle receiving end 40 has a handle receiving chamber 59. The handle receiving chamber 59 is formed between the first handle receiving end 40a and the second handle receiving end 40b. The handle receiving chamber 59 is used for receiving the first handle assembly 36. The handle receiving chamber 59 has a longitudinal axis X2, and the first handle assembly 36 is contained in the handle receiving chamber 59 and is capable of moving linearly along the longitudinal axis X2.

Moreover, as shown in figure 2, the first handle assembly 36 comprises a guiding portion 60 and a gripping portion 62, and the guiding portion 60 is a thin and long rod which is contained in the handle receiving chamber 59. The gripping portion 62 is approximately D-shaped. One side of the D-shaped gripping portion 62 is a straight-lined gripping edge 64. The other side of the D-shaped gripping portion is a curved connecting edge 66. The gripping portion 62 is connected with the guiding portion 60 via the connecting edge 66. A control switch 68 is arranged on the inside of the gripping edge 64 and electrically connected with the motor 28 for controlling the start-up and stop of the motor 28. Two ends of the gripping edge 64 are symmetrically provided with safety switches 70, so that both left-handed operation and right-handed operation are convenient. The connecting edge 66 is connected with the guiding portion 60.

The guiding portion 60 is contained in the handle receiving chamber 59 and operationally and linearly moves along the longitudinal axis X2 of the handle receiving chamber 59.

A connecting mechanism is arranged between the first handle assembly 36 and the working head 22. The connecting mechanism is directly connected with the first handle assembly 36 and the guide bar 24 and converts the linear motion of the first handle assembly 36 into the pivotal motion of the guide bar 24. The connecting mechanism is a planar multi-rod mechanism 72.

As shown in figure 2, the planar multi-rod mechanism 72 comprises a driving part, a connecting rod and a driven part 82. The connecting rod is positioned between the driving part and the driven part 82 and respectively hinged to the driving part and the driven part 82. The connecting rod comprises a first connecting rod 76, a second connecting rod 78 and a third connecting rod 80. The guiding portion 60 of the first handle assembly 36 is configured as the driving part of the planar multi-rod mechanism 72, and when the operator pushes the gripping portion 62 towards the working end 22, the guiding portion 60 is capable of moving linearly along the longitudinal axis X2 of the handle receiving chamber 59. The driven part 82 is fixedly connected with the guide bar 24, and the first connecting rod 76, the second connecting rod 78 and the third connecting rod 80 are positioned between the driving part and the driven part 82, specifically positioned between the guiding portion 60 of the first handle assembly 36 and the driven part 82. One end of the first connecting rod 76 and the guiding portion 60 of the first handle assembly 36 have a hinged connection. The other end of the first connecting rod 76 is hinged to one end of the second connecting rod 78, and the other end of the second connecting rod 78 is capable of being pivotally connected to the connecting portion 42a of the first semi-housing 34a. One end of the third connecting rod 80 and the middle portion of the second connecting rod 78 have a hinged connection. The other end of the third connecting rod 80 and the driven part 82 has a hinged connection.

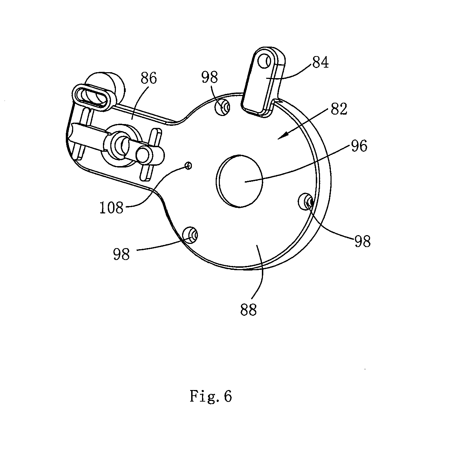

As shown in figure 6, the driven part 82 is configured as V-shaped, and a first edge 84 of the V-shaped driven part 82 is hinged to the other end of the third connecting rod 80. A second edge 86 of the V-shaped driven part 82 and the guide bar 24 are fixedly connected by the bolts. A V-shaped bottom 88 of the V-shaped driven part 82 is installed on the motor output shaft 30. The driven part 82 is fixedly connected with the guide bar 24, so when the driven part 82 rotates around the axis X1 of the motor output shaft, the guide bar 24 also rotates in the plane of the guide bar around the axis X1 of the motor output shaft.

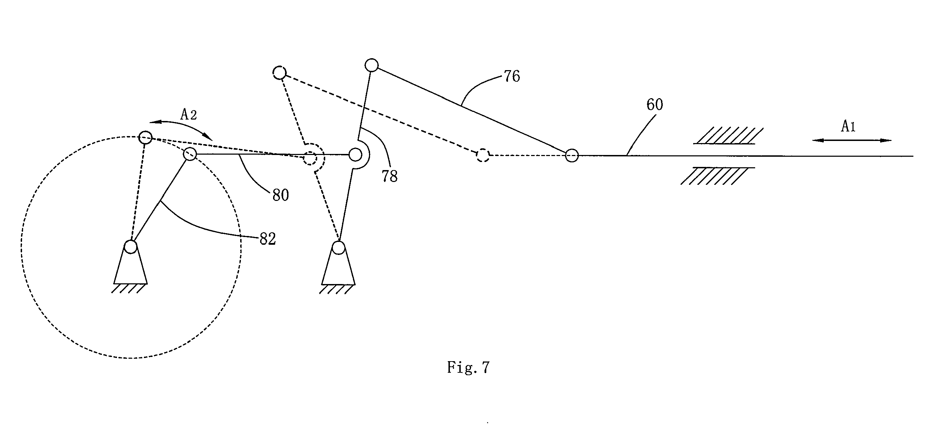

Figure 7 is a motion schematic diagram of the planar multi-rod mechanism. The driving part (guiding portion 60) moves linearly; when the driving part (guiding portion 60) moves from a first position (represented by the full line) to a second position (represented by the dotted line), the driven part 82 pivots to the second position (represented by the dotted line) from the first position (represented by the full line); the arrow A1 represents the motion direction of the driving part (guiding portion 60), and the arrow A2 represents the motion direction of the driven part 82.

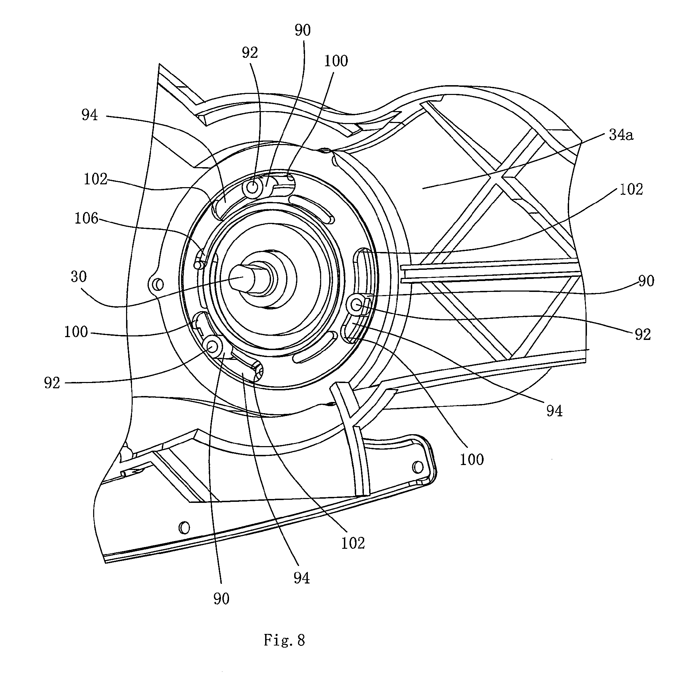

The chainsaw 20 comprises a limiting mechanism for limiting the rotation of the guide bar so as to avoid damaging the U-shaped protecting hood because of excess rotation of the guide bar. As show in figure 8, a motor bracket (not illustrated) is installed on a end of the motor 28 and fixedly connected with the motor 28, and three projected columns 90 extend from the motor bracket along the direction of the motor output shaft 30 and are arranged at an equal interval along the circumference. Each projected column 90 has a first receiving hole 92. The first connecting portion 42a of the first semi-housing 34a is provided with three waist-shaped grooves 94 at an equal interval along the circumference, and the three waist-shaped grooves 94 extend along the circumference. The projected columns 90 pass through the three waist-shaped grooves 94 and are capable of moving along the circumferential direction along the waist-shaped grooves 94.

As shown in figure 6, the V-shaped bottom 88 of the V-shaped driven part 82 is approximately round, and the middle portion of the V-shaped bottom 88 is provided with a mounting hole 96 through which the driven part 82 is sleeved on the motor output shaft 30. The V-shaped bottom 88 is provided with three second receiving holes 98 at an equal interval along the circumference, and three second receiving holes 98 are respectively aligned with the first receiving holes 92 on the three projected columns 90 so that a bolt is capable of passing through the first receiving hole 92 and the second receiving hole 98 to fixedly connect the driven part 82 and the projected column 90; the V-shaped driven part 82 is fixedly connected with the guide bar 24, so the guide bar 24 is fixedly connected with the projected columns 90. Besides, the V-shaped driven part 82 is fixedly connected to the motor bracket, so the pivotal motion of the driven part 82 drives the motor 28 to rotate.

One end of each waist-shaped groove 94 is provided with a first block face 100, the other end of each waist-shaped groove 94 is provided with a second block face 102, and the projected columns 90 may move along the waist-shaped grooves 94, respectively coupling with the first block faces 100 or the second block faces 102. When the projected columns 90 are coupled with the first block faces 100, the working head 22 is contained in the first receiving chamber 48, the guide bar 24 rotates to the approximate top of the U-shaped guard38, and at this time the working head 22 keeps a certain distance from the top of the U-shaped guard38 to avoid touching the top of the U-shaped guard38. When the projected columns 90 are coupled with the second block faces 102, the working head 22 is contained in the second receiving chamber 50, the guide bar 24 rotates to the approximate bottom of the U-shaped guard38, and at this time the working head 22 keeps a certain distance from the bottom of the U-shaped guard 38 to avoid touching the bottom of the U-shaped guard 38.

A torsion spring 106 (as shown in figure 8) is positioned between the first connecting portion 42a of the first semi-housing 34a and the driven part 82, and one end of the torsion spring 106 is fixedly connected with the connecting portion 42a of the first semi-housing 34a. The driven part 82 is provided with a small hole 108 (as shown in figure 6), and the other end of the torsion spring 106 is contained in the small hole 108, which makes the torsion spring 106 fixedly connected to the driven part 82. The purpose of the arrangement of the torsion spring 106 is to ensure that no matter when the cutting ends, the working head 22 will automatically return to the original position, namely the first receiving chamber 48. The working head is completely contained in the U-shaped guard38 to ensure the safety of the operations.

The chainsaw 20 comprises a transmission mechanism 110 (as shown in figure 2) positioned between the motor 28 and the working head 22 and the transmission mechanism 110 comprises a chain wheel 112 that is arranged on the motor output shaft 30 and is capable of rotating around the axis X1 along with the motor output shaft 30. The chain wheel 112 is engaged with the flexible chain 26 to drive the flexible chain 26 to rotate around the guide bar24.

During work, press the control switch 68 on the gripping portion 62 of the first handle assembly 36 with a hand, then the motor 28 will be started, the motor output shaft 30 will start to rotate, and the chain wheel 112 will rotate along with the motor output shaft 30 and drive the flexible chain 26 to rotate around the guide bar 24. Meanwhile, the operator grips the gripping portion 62 of the first handle assembly 36 and pushes the first handle assembly 36 towards the working head 22 and then the guiding portion 60 moves linearly along the longitudinal axis X2 of the receiving chamber 59 and, under the action of the planar multi-rod mechanism 72, the guide bar 24 pivots around the axis X1 of the motor output shaft in the guide bar plane to perform the cutting operation. The guide bar 24 and the motor 28 are fixedly connected, so the pivoting of the guide bar 24 drives the motor 28 to rotate. The first handle assembly 36 is pushed towards the working head, so the guide bar 24 pivots to realize cutting. It should be noted that common skilled persons in this field are capable of pulling the first handle assembly 36 away from the working head simply by changing the position of the planar multi-rod mechanism 72, so the guide bar 24 pivots to realize cutting.

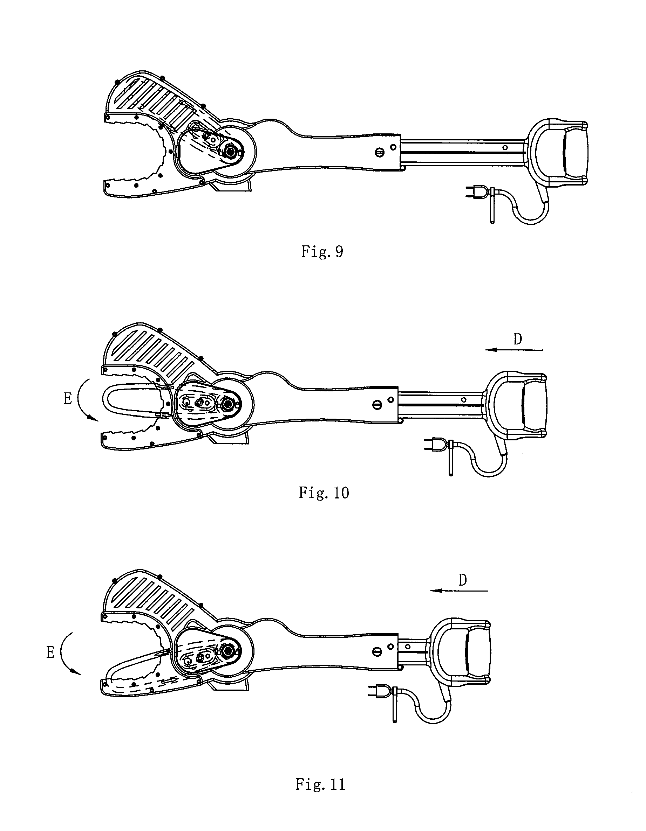

Figures 9, 10 and 11 are schematic views of the chainsaw 20 at the working process state. Figure 9 is the schematic view of the chainsaw at the off working state, wherein the working head 22 is completely contained in the first receiving chamber 48 of the U-shaped guard38. As shown in figure 10, if the first handle assembly 36 is pushed towards the D direction, the working head 22 will pivot along the E direction, start to cut the work pieces, and gradually expose from the first receiving chamber 48. As shown in figure 11, if the first handle assembly 36 is continuously pushed towards the A direction, the working head 22 will pivot along the E direction to partly enter the first receiving chamber 50 and finish cutting the work pieces.

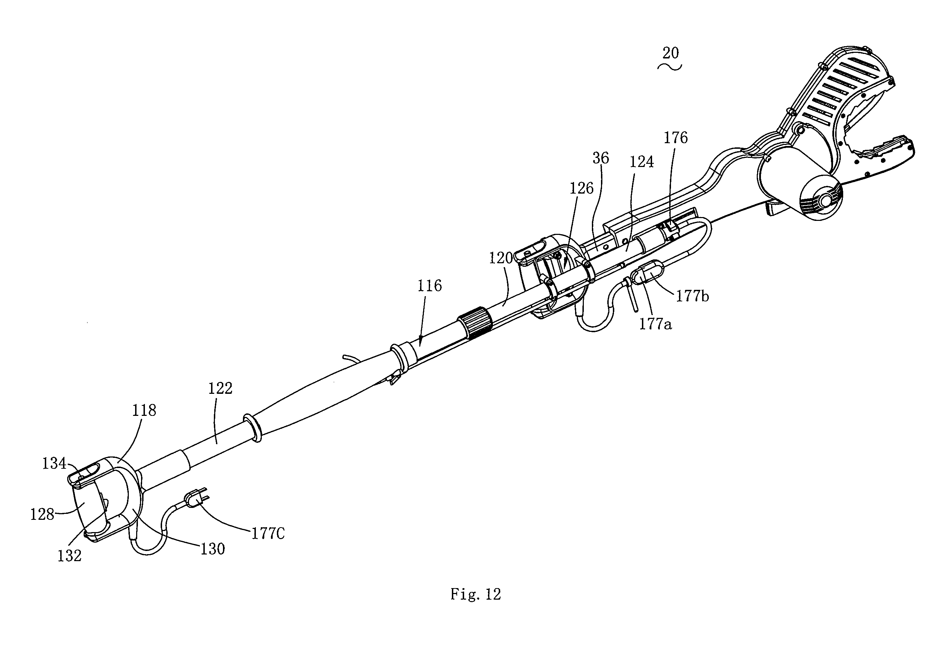

As shown in a first embodiment of the present invention in figure 12, the chainsaw 20 also comprises an extending rod to facilitate cutting the work pieces at higher positions, and the extending rod is configured as a second handle assembly 116. The second handle assembly 116 comprises a second gripping portion 118 and a second extending portion 120. The second extending portion 120 comprises a first end 122 and a second end 124, the first end 122 is connected with the second griping portion 118, and the second end 124 is connected with the first handle assembly 36. A locking mechanism 126 is arranged between the second end 124 of the second extending portion 120 and the first handle assembly 36. The second gripping portion 118 of the second extending portion 120 is D-shaped.

One side of the second gripping portion 118 is a gripping edge 128, the other side is a connecting edge 130, and a control switch 132 is arranged on the inside of the gripping edge 118 and electrically connected with the motor 28 for controlling the start-up and stop of the motor 28. Two ends of the holding edge 128 are symmetrically provided with safety switches 134, so that both the left-handed operation and the right-handed operation are convenient. The connecting edge 130 is connected with the second extending portion 120.

The second extending portion 120 is a thin and long rod, capable of being manufactured into a telescopic rod.

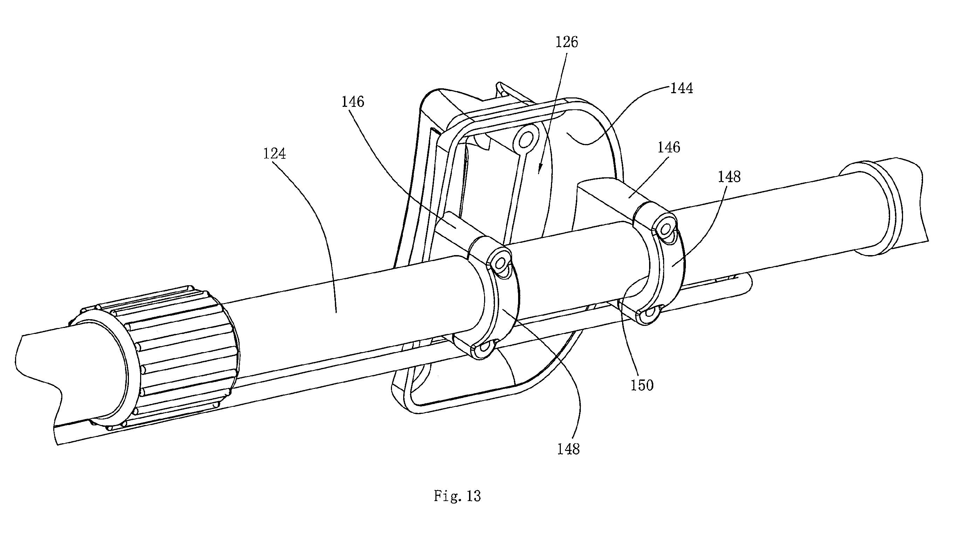

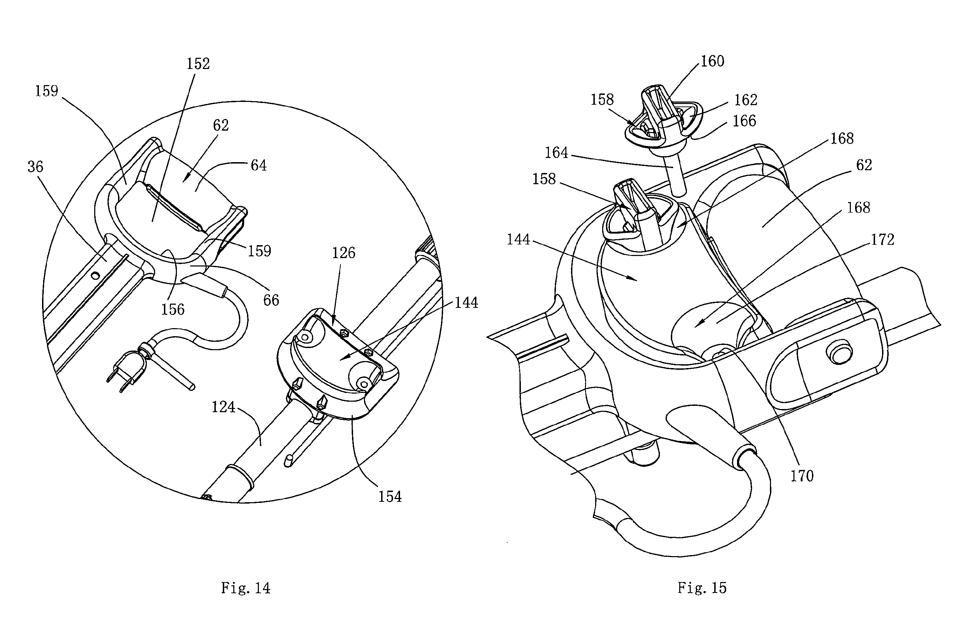

As shown in figure 13 and figure 14, the second end 124 of the second extending portion 120 of the second handle assembly 116 is detachably and fixedly connected with the first handle assembly 36 via the locking mechanism 126. The detachably fixed connection means that the second end 124 is detachably connected with the first handle assembly 36, and once connected the two perform one relative motion. The locking mechanism 126 comprises a locking bracket 144. Two C-shaped clamping blocks 146 are arranged on one side of the locking bracket 144 at an interval, each C-shaped clamping block 146 is respectively provided with a C-shaped clamping piece 148, and the C-shaped clamping block 146 and the C-shaped clamping piece 148 are connected by nuts and bolts. The C-shaped clamping piece 148 and the C-shaped clamping block 146 are arranged oppositely to form a clamping hole 150 there-between, and the second end 124 of the second extending portion 120 of the second handle assembly 116 is contained in the clamping hole 150. The shape of the clamping hole 150 is matched with the cross section shape of the second end 124 of the second extending portion 120 of the second handle assembly 116 so the second end 124 of the second handle assembly 116 may be clamped therein.

The gripping portion 62 of the first handle assembly 36 is provided with a handle receiving hole 152. The handle receiving hole 152 is defined by the gripping edge 64and the connecting edge 66 of the first handle assembly 36. The handle receiving hole 152 is approximately D-shaped. The locking bracket 144 is detachably contained in the handle receiving hole 152, and the shape of the locking bracket 144 is approximately the same as that of the handle receiving hole 152.

As shown in figure 14, the other side of the locking bracket 144 is provided with a first matched face 154. One side of both the griping edge 64 and the connecting edge 66 of the gripping portion 62 of the first handle assembly 36 is provided with a second matched face 156. The locking bracket 144 is contained in the handle receiving hole 152. The second matched face 156 and the first matched face 154 are coupled and matched in shape. Therefore, when contained in the handle receiving hole 152, the locking bracket 144 performs no rotation in the handle receiving hole 152. When the locking bracket 144 is contained in the handle receiving hole 152, the control switch 68 on the first handle assembly 36 is pressed by the locking bracket 144 and is therefore in an electrically conducting state.

As shown in figure 15, the locking mechanism 126 also comprises two locking knobs 158, which may clamp the gripping portion 62 of the first handle assembly 36 between the locking bracket 144 and the locking knobs 158.

The other side of the connecting edge 66 of the gripping portion 62 of the first handle assembly 36 is provided with a third matched face 159 (as shown in figure 14).

As shown in figure 15, the locking knob 158 comprises an operation portion 160, a main body portion 162 and an adaptation portion 164. The operation portion 160 is positioned on the top of the locking knob 158 to be operated by the operator manually. The main body portion 162 is provided with a fourth matched face 166, and the adaptation portion 164 is a column body with screw threads. The locking bracket 144 is provided with two knob receiving portions 168 for partly receiving the locking knobs 158. The knob receiving portion 168 comprises a receiving through-hole 170 with a smaller diameter and a receiving chamber 172 with a larger diameter, wherein the receiving through-hole 170 is used for receiving the column body with screw threads of the locking knob, while the receiving chamber 172 is used for receiving the main body part of the locking knob 158. The column body with screw threads comprises a free end matched with a nut, so the locking knob 158 is capable of being reliably installed on the locking bracket 144. The fourth matched face 166 is optionally matched with the third matched face 159, and the two are matched in shape.

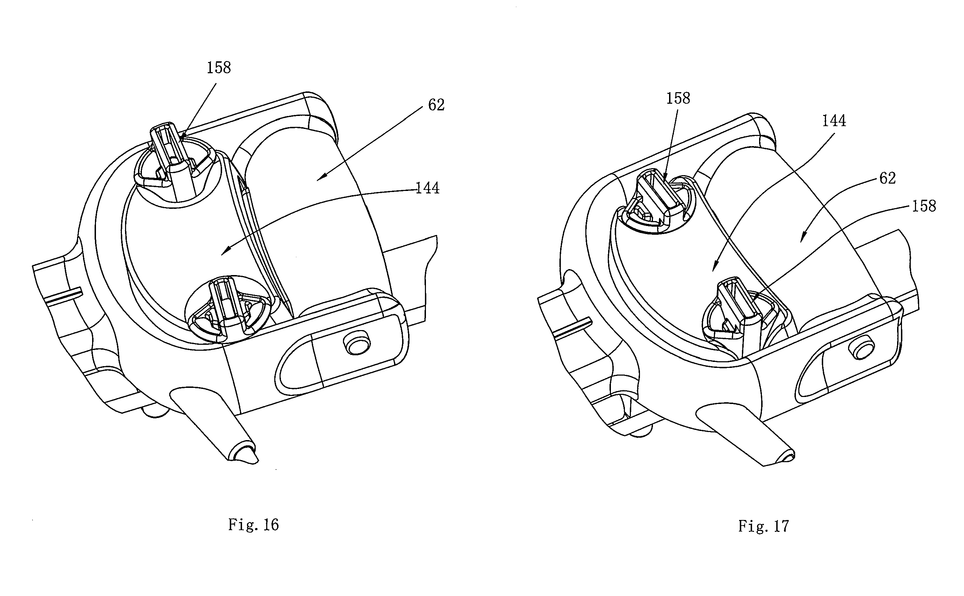

The locking knob 158 is rotated to move between a first position and a second position. When the locking knob 158 is located at the first position as shown in figure 16, the first matched face 154 and the second matched face 156 are matched; when the third matched face 159 and the fourth matched face 166 are matched, the gripping portion 62 of the first handle assembly 36 is tightly clamped between the locking knob 158 and the locking bracket 144.

As shown in figure 17, when rotated to 180 degrees, the locking knob 158 is located at the second position, and the fourth matched face 166 is rotationally moved away from the third matched face 159, which means the fourth matched face 166 is not rotationally matched with the third matched face 159. At this time, the locking bracket 144 is capable of being removed from the handle receiving hole 152 of the first handle assembly.

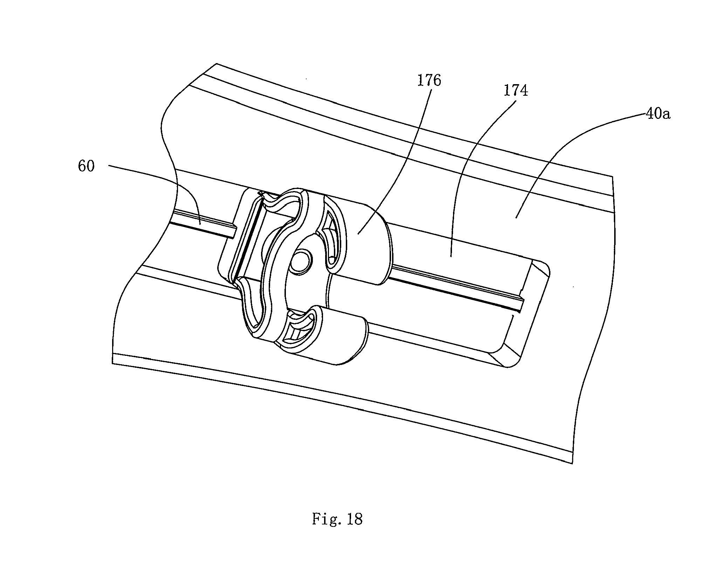

As shown in figure 18, the first handle receiving end 40a of the first semi-housing 34a is provided with a longitudinal slot 174. A C-shaped bracket 176 is installed on the guiding portion 60 of the first handle assembly 36 and fixed on the guiding portion 60 by nuts and bolts. The C-shaped bracket 176 extends out from the longitudinal slot 174 of the first handle receiving end 40a. The second end 124 of the of the second extending portion 120 of the second handle assembly 116 is supported on the C-shaped bracket 176. The C-shaped bracket 176 is made of aluminum.

As shown in figure 12, the first handle assembly 36 and the second handle assembly 116 are electrically connected. The gripping portion 62 of the first handle assembly 36 is provided with a wire of which one end is connected with a plug 177a and the other end is electrically connected with the control switch 68, the motor 28, etc. The second end 124 of the second extending portion 120 of the second handle assembly 116 is provided with a wire, of which one end is provided with a socket 177b, and the socket 177b is adaptive to the plug 177a for electric connection. The second gripping portion 118 is provided with a plug 177c for connecting with an external power supply. The other end of the wire is electrically connected with the control switch 132 on the second gripping portion 118 via a lead.

When the second handle assembly 116 is required to be connected with the first handle assembly 36, the C-shaped bracket 176 is installed on the first handle assembly 36. Once installed, the C-shaped bracket 176 is capable of being fixed thereon, even if only the first handle assembly 36 is used and the second handle assembly 116 is not used, and the C-shaped bracket 176 is capable of being fixed on the first handle assembly 36 for standby. The locking bracket 144 is connected with the first locking knob 158, and the second handle assembly 116 is fixedly connected with the locking bracket 144. The second end 124 of the second extending portion 120 of the second handle assembly 116 passes through the C-shaped bracket 176, so the second end 124 of the second extending portion 120 of the second handle assembly 116 is capable of being supported on the C-shaped bracket 176. Press the safety switch 70 and the control switch 68 of the first handle assembly 36 by hand, penetrate the locking bracket 144 through the handle receiving hole 152 of the first handle assembly 36, release the safety switch 70 and the control switch 68 when the locking bracket 144 slowly enters the handle receiving hole 152, rotate the locking knob 158 to couple the third matched face 159 and the fourth matched face 166, and the gripping portion 62 of the first handle assembly 36 will be clamped between the locking bracket 144 and the locking knob 158. Insert the plug 177a on the first handle assembly 36 into the socket 177b on the second handle assembly to electrically connect the first handle assembly 36 and the second handle assembly 116. The second handle assembly 116 is thereby reliably installed on the chainsaw 20.

When cutting twigs at a higher position, install the second handle assembly 116 on the chainsaw 20 according to the mentioned method. During cutting, the plug 177c on the gripping portion 118 of the second handle assembly is connected to the external power supply. Place the U-shaped jaw 56 onto the twigs to be cut and press against the twigs; at this time, the operator should grip the gripping portion 118 of the second handle assembly and control the safety switch 134 and the control switch 132 at the same time with one hand and grip the extending portion 120 of the second handle assembly with other hand to push the second handle assembly 116 towards the working head 22 or pull the second handle assembly 116 away from the working head 22; then, the guide bar 24 will rotate to cut the twigs.

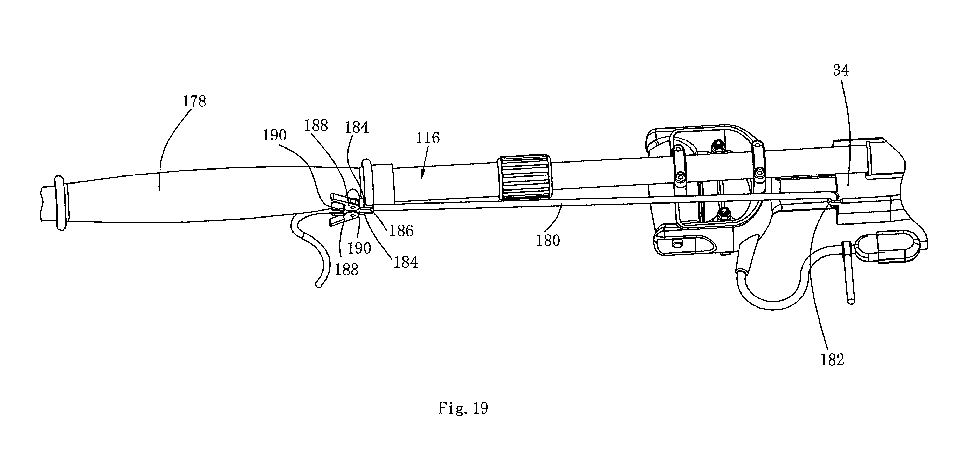

As shown in figure 19, the middle portion of the second handle assembly 116 of the chainsaw 20 is provided with a sleeve 178 that may move along the middle portion. The chainsaw further comprises a cord 180, of which one end is connected with the main body 34 and the other end is connected to the sleeve 178. The main body 34 is provided with a clip hook 182, and one end of the cord 180 is hung on the clip hook 182. The sleeve 178 is provided with two walls 184 extending radially, a guiding groove 186 is defined between the two walls extending radially, the other end of the cord 180 passes through the guiding groove, a pivotal elastic cam clip 188 is installed at the middle portion of each wall 184, each elastic cam clip 188 has a cam face 190 extending into the guiding groove 186, the cord 180 is clamped between the two cam faces 190, and the cam clip 188 may clamp or release the cord 180.

When cutting thin twigs at higher positions, install the second handle assembly 116 on the chainsaw 20 according to the mentioned method and connect the plug 177c on the gripping portion 118 of the second handle assembly to the external power supply. Place the U-shaped jaw 56 onto the twigs to be cut; at this time, the operator should grip the gripping portion 118 of the second handle assembly, control the safety switch 134 and the control switch 132 at the same time with one hand and grip the sleeve 178 with other hand to push the second handle assembly 116 towards the working head 22 or pull the second handle assembly 116 away from the working head 22; then, the guide bar 24 will rotate to cut the twigs.

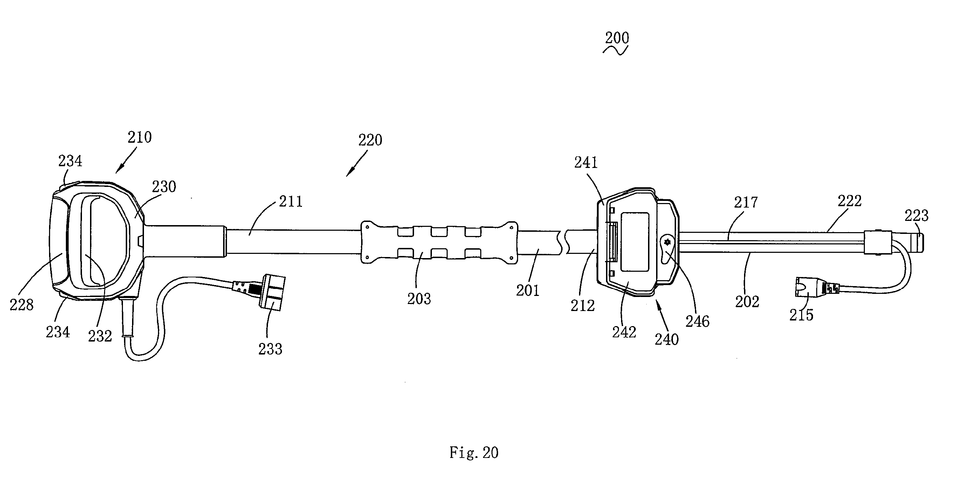

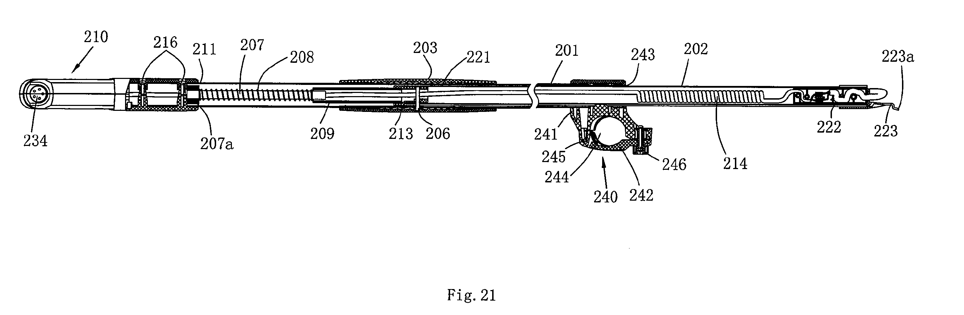

As shown in figure 20 and figure 21, a second handle assembly 200 in another embodiment of the present invention comprises a second gripping portion 210 and a second extending portion 220, wherein the second extending portion 220 comprises an outer tube 201, the second gripping portion 210 is connected with the first end 211 of the outer tube 201, and the second end 212 of the outer tube 201 is connected with a locking mechanism 240. A connecting element for connecting the second handle assembly 200 and the main body 34 comprises an inner tube 202 that is able to slide and be arranged with respect to the outer tube 201. An operating element with respect to the inner tube 202 is fixedly arranged at the outer tube 201. In this embodiment, the operating element is a sleeve 203 sleeved on the outer tube 201, and the sleeve 203 on the outer tube 201 is about 0.5m away from the second gripping portion 210. Of course, the sleeve in this embodiment is capable of being replaced by other operating elements, such as a control handle that is fixedly connected with the inner tube 202 and projected outside the outer tube 201. The first end 221 of the inner tube 202 extends into the outer tube 201, and the second end 222 extends out the outer tube 201 and is provided with a joint member 223 that is fixedly connected with the main body 34 of the chainsaw. The joint member 223 is made of steel, with one end thereof fixedly connected to the outer wall of the second end 222 of the inner tube 202, and the other end is a free end which is bent to form a step-like cooperating portion 223a. The outer wall of the inner tube 202 is provided with a groove 217 extending longitudinally, and the groove 217 functions as a guide when the inner tube 202 slides with respect to the outer tube 201. The outer tube 201 and the inner tube 202 in this embodiment are made of light aluminum materials with weight and strength meeting requirements; skilled persons in this field would be capable of using other materials as substitutes. The inner tube 202, which is made from a rigid material, and the cord, which is made from a flexible material, have different structures.

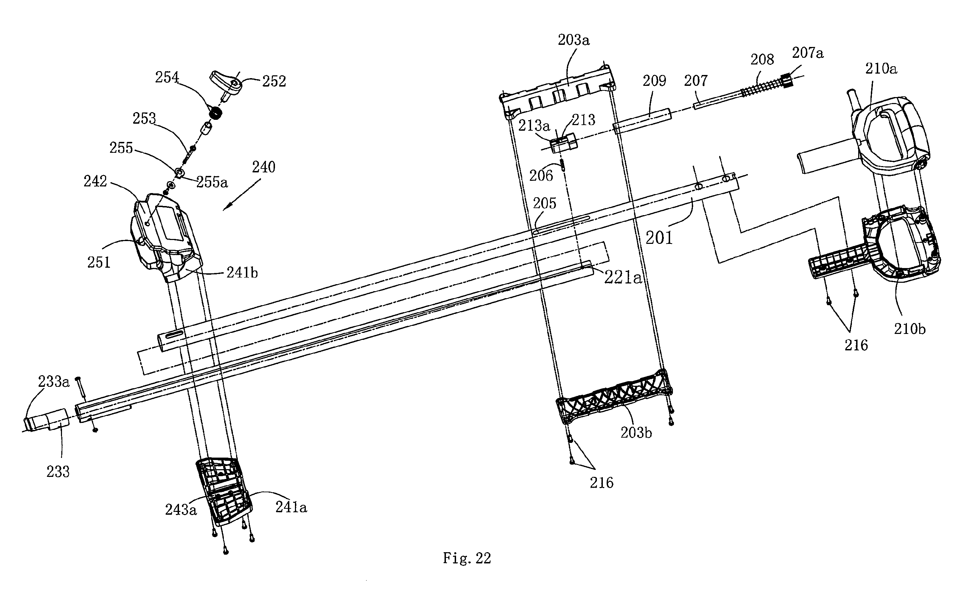

The second gripping portion 210 is D-shaped, one side thereof is a gripping edge 228, the other side is a connecting edge 230, a control switch 232 is arranged on the inside of the gripping edge 228, both ends of the gripping edge 228 are provided with a safety switch 234, and the outer side of the connecting edge 230 is provided with a lead, one end of the lead connected with a plug 233. Connecting lead 214, which is electrically connected with the plugs 233, is arranged in the cavities of the inner tube 202 and the outer tube 201 and pass through the cavity of the second end 222 of the inner tube 202 to connect with a socket 215. The locking mechanism 240 comprises a base 241 and a cover body 242, the base 241 is provided with a rotating shaft 245, the cover body 242 pivots on the rotating shaft 245 with respect to the base 241, the base 241 is provided with a first receiving chamber 243 for receiving the outer tube 201 and is fixedly connected with the outer tube 201, the opposite inner sides of the base 241 and the cover body 242 are respectively provided with a semi-round concave chamber, and a locking member 246 is arranged between the base 241 and the cover body 242. When the relative positions of the base 241 and the cover body 242 are locked by the locking member 246, a second receiving chamber 244 is formed between the base 241 and the cover body 242. Furthermore, as shown in figure 21 and figure 22, the second gripping portion 210 is connected to the first end 211 of the outer tube 201 via screws 216 or by other means. The part of the outer tube 201 corresponding to the sleeve 203 is provided with a longitudinal slot 205, and the sleeve 203 is formed by connecting two semi-shells 203a and 203b by screws 216 or by other methods. The inner cavity of the outer tube 201 is provided with a pin 207 extending longitudinally, with one end of the pin 207 provided with a pin head 207a with a diameter bigger than that of the pin 207, and the pin head 207 is pressed against one end 211 of the outer tube 201. The pin 207 is provided with a spring 208; the pin part 207 away from the pin head 207a is contained in a sleeve tube 209 in such a way that one end of the spring 208 is pressed against and adapted to the pin head 207a and the other end is pressed against and adapted to one end of the sleeve tube 209; the other end of the sleeve tube 209 corresponding to the spring 208 is provided with the joint member 213. The joint member 213 is configured as a hollow cylinder. The outer diameter of the sleeve tube 209 is matched with the inner diameter of the joint member 213, and they are therefore sleeved together. A through hole 213a is formed in the middle part of the outer wall along the vertical direction of the joint member 213, a round hole 221a is correspondingly formed in the tube wall of the first end 221 of the inner tube 202, a concave hole (not shown in the figure) is formed in the corresponding inside position of the semi-shell 203a of the sleeve 203 . A cylinder pin 206 is penetrated through the through hole 213a of the joint member 213, with one end of the cylinder pin 206 projected from the through hole 213a and passing through the round hole 221a of the inner tube 202 to be fixed in the concave hole of the semi-shell 203b of the sleeve 203 via the longitudinal slot 205 of the outer tube 201. Therefore, the sleeve 203 is fixedly connected with respect to the inner tube 202, which means the sleeve 203 and the inner tube 202 are fixed at relative positions by the pin 207 and the joint member 213. When the sleeve 203 slides with respect to the outer tube 201, the longitudinal slot 205 on the outer tube 201 limits the sliding stroke of the sleeve 203.

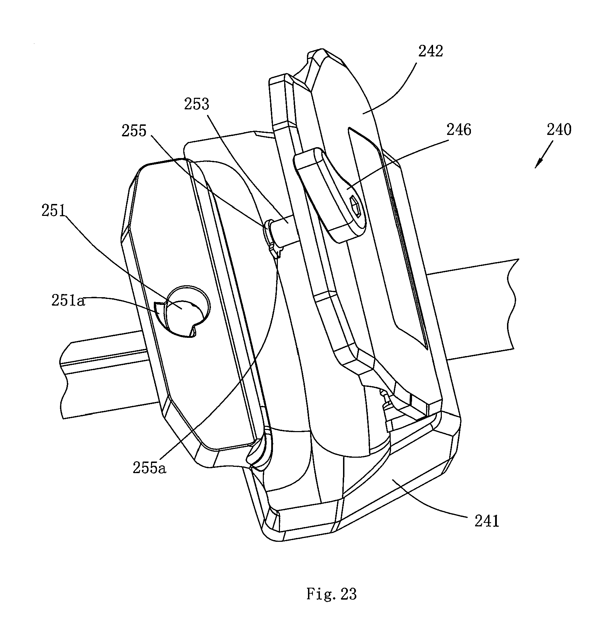

Furthermore, as shown in figure 22 and figure 23, the base 241 of the locking mechanism 240 comprises a first base body 241 a and a second base body 241 b, the opposite inner sides of the first base body 241a and the second base body 241b are respectively provided with a semi-round concave chamber 243a (figure 22 only shows one), the first base body 241a and the second base body 241b are integrally connected together by screws or by other methods, the two semi-concave chambers 243a are joined to form the receiving chamber 243 for receiving the outer tube 201, and the outer tube 201 is fixedly connected with respect to the base 241. The locking member 246 comprises an opening 251 on the base body 241b, the opening 251 is a profile hole of which the inner wall extends downwards to form a slope face 251 a, a locking button 252 is capable of being rotationally arranged on the cover body 242, and a lock cylinder 253 that is fixedly connected with the locking button 252, wherein the tail end, away from the locking button 252, of the locking cylinder 253 is fixedly connected with a round clamping member 255 with a flange 255a and a spring 254 is arranged between the locking button 252 and the lock cylinder 253. The spring 254 in this embodiment is a torsion spring with one end connected with the locking button 252 and the other end connected with the cover body 242; at the normal state, the locking button 252 and the lock cylinder 253 are located at a first position under the action of the spring 254 and the flange 255a of the clamping member 255 directly faces the inner slope face 251 a of the profile hole 251. Once the operator applies a force to the cover body 242 towards the base 241, the flange 255a of the clamping member 255 contacts the inner slope face 251a. During the operation of the operator, the flange 255a of the clamping member 255 slides downwards along the slope face 251a, while the lock cylinder 253 overcomes the spring force of the spring 254 and drives the locking button 252 to rotate; when the flange 255a of the clamping member 255 slides along the slope face 251a to a second position, the clamping member 255 and the lock cylinder 253 together fall towards the bottom of the profile hole 251 and then pass through the profile hole 251, the lock cylinder 253 reversely rotates to automatically return to the first position under the action of the spring 254, and the clamping member 255 locks the cover body 242 on the base body 241 by clamping the flange 255a and the slope face 251a. When unlocking, reversely rotate the locking button 252 positioned above the cover body 242 to drive the clamping member 255 that is arranged at the lower end of the lock cylinder 253 to rotate it to a position staggered with the slope face 251a, and then the lock cylinder 253 is capable of being released from the profile hole 251 and unlocked. The receiving chamber 244 formed between the base 241 and the cover body 242 optionally locks the first handle assembly of the chainsaw by the locking member 246.

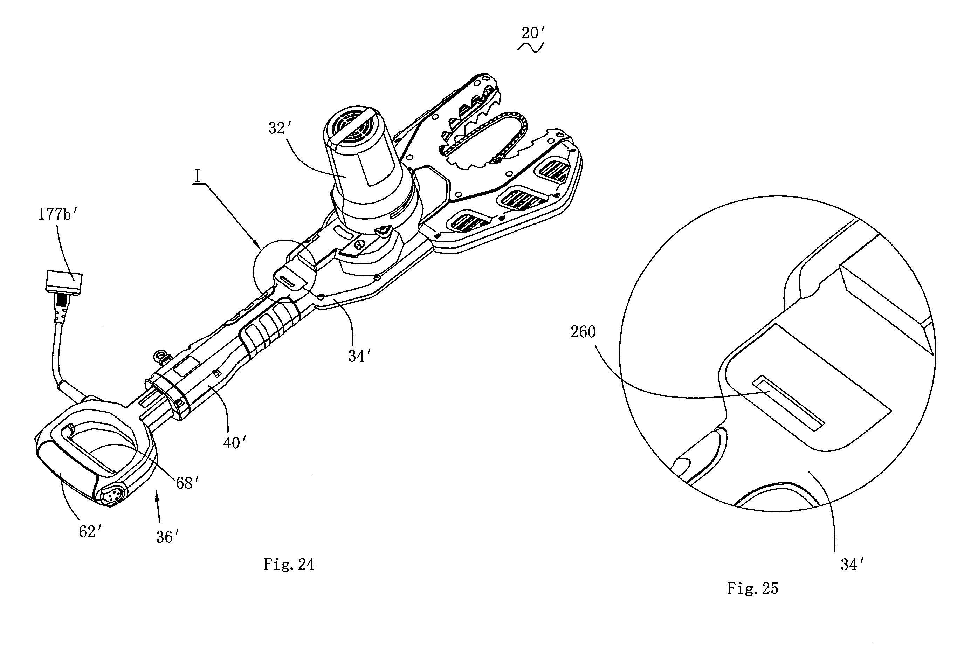

As shown in figure 24 and figure 25, the basic structure of the chainsaw 20' in this embodiment is approximately the same with the chainsaw 20, so no detailed description is provided. The main body 34' positioned between the handle receiving end 40' and the motor housing 32' is provided with a slot 260 that is matched with the cooperating portion 223a of the joint member 223 of the inner tube 202 in width. When the second handle assembly 200 is connected with the chainsaw 20', the step-like cooperating portion 223a is engaged with and adapted to the slot 260.

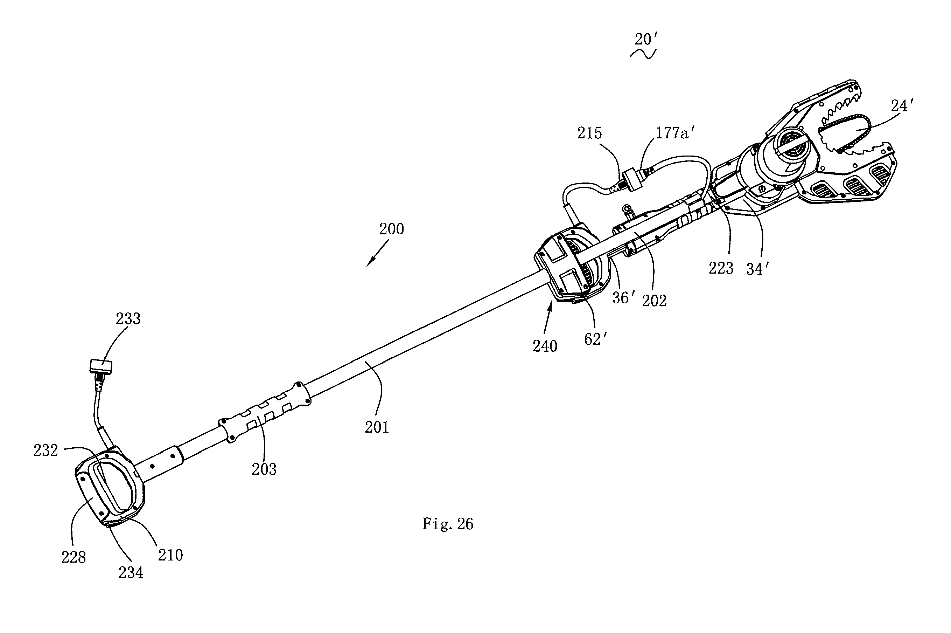

Furthermore, as shown in figure 24 and figure 26, the second handle assembly 200 is adapted to the chainsaw 20' to cut the work pieces at higher positions. At this time, the joint member 223 positioned at the end of the inner tube 202 is fixedly adapted to the main body 34', the gripping portion 62' of the first handle assembly 36' is locked in the receiving chamber 244 (as shown in figure 21) of the locking mechanism 240, the control switch (not shown in the figure) on the inside of the gripping portion 62' is limited by the receiving chamber 244 to be in the triggering state, and the plug 177a' of the first handle assembly 36' is thusly inserted into the socket 215 to make the first handle assembly 36' and the second handle assembly 200 electrically conducting. The outer tube 201 and the first handle assembly 36' are fixed in their relative positions by the locking mechanism 240, while the inner tube 202 and the main body 34' of the chainsaw are fixed in their relative positions by the joint member 223. Therefore, when the outer tube 201 slides with respect to the inner tube 202, the linear motion of the gripping portion 62' of the first handle assembly with respect to the main body 34' is capable of being realized. The sleeve 203 is fixedly connected with respect to the inner tube 202, so, during operation, connect the plug 233 to the external power supply first, then grip the sleeve 203 of the outer tube 201 with one hand, grip the gripping edge 228 of the second handle assembly 200 and control the safety switch and the control switch with the other hand to push or pull the gripping portion 62' of the second handle assembly 200 towards or away from the working head, so as to make the gripping portion 62' move with respect to the sleeve 203; then, the guide bar 24' of the chainsaw is capable of being driven to rotate to perform cutting.

In other embodiments of the present invention, the connecting mechanism may be a rack and pinion gear (not shown in the figure). The rack and pinion gear usually comprise a rack fixedly connected with the first handle assembly 36 and a gear fixedly connected with the guide bar 24. By pushing or pulling the first handle assembly 36, the gear pivots to drive the guide bar 24 to rotate.

In another embodiment of the present invention, the connecting mechanism may be a pulley mechanism (not shown in the figure). The pulley mechanism usually comprises a pulley wheel and a cord, wherein the cord is sleeved on the pulley wheel, one end of the cord is fixedly connected with the first handle assembly 36, the other end of the cord is fixedly connected to the main body 34, and the pulley wheel is fixedly connected with the guide bar 24 via the driven part 82; during operation, the operator pulls or pushes the first handle assembly 36, and the pulley wheel will drive the driven part 82 to pivot, thus enabling the driven part 82 to drive the guide bar 24 to rotate.

## Claims

1. A vegetation pruning device (20) comprising;
a main body (34);
a cutting element (26);
a guide bar (24) for supporting the cutting element;
a motor (28) for driving the cutting element;
a first handle assembly (36);
a second handle assembly (116; 200);
a locking mechanism (126; 240) for detachably securing the second handle assembly to the first handle assembly; and
a connecting mechanism (72) positioned between the first handle assembly and the guide bar, **characterized in that** each of the first handle assembly and the second handle assembly is operable to move linearly towards or away from the guide bar, and the connecting mechanism is provided to change the linear movement of the first or the second handle assembly to the pivoting of the guide bar.

2. A vegetation pruning device (20) according to claim 1, further comprising a support wall (56) for pressing against a work piece to be cut.

3. A vegetation pruning device (20) according to claim 1, further comprising a U-shaped guard (38).

4. A vegetation pruning device (20) according to claim 3, wherein the U-shaped guard (38) comprises an inner edge (54) and a U-shaped jaw (56) for detachably mounting on the inner edge.

5. A vegetation pruning device (20) according to claim 4, wherein the U-shaped jaw (56) comprises an inner side and a plurality of teeth (58a, 58b) arranged on the inner side.

6. A vegetation pruning device (20) according to claim 4, wherein the U-shaped jaw (56) is made of steel.

7. A vegetation pruning device (20) according to claim 1, wherein the first handle assembly (36) comprises a guiding portion (60), and the main body (34) comprises a handle receiving chamber (59) for receiving the guiding portion, the handle receiving chamber having a longitudinal axis (X2), the guiding portion being operable to move linearly along the longitudinal axis of the handle receiving chamber.

8. A vegetation pruning device (20) according to claim 7, wherein the first handle assembly (36) further comprises a first gripping portion (62) which is configured as D-shaped.

9. A vegetation pruning device (20) according to claim 8, wherein the first gripping portion (62) comprises a gripping side (64) configured as straight-lined and a connecting side (66) configured as curve-shaped, the connecting side securing the first gripping portion (62) to the guiding portion (60).

10. A vegetation pruning device (20) according to claim 9, wherein a safety switch (70) is symmetrically attached to both ends of the gripping side (64).

11. A vegetation pruning device (20) according to claim 9, wherein a control switch (68) is arranged in the inner part of the gripping side (64).

12. A vegetation pruning device (20) according to claim 1, wherein the connecting mechanism (72) is configured as a planar multi-rod mechanism.

13. A vegetation pruning device (20) according to claim 12, wherein the planar multi-rod mechanism (72) comprises a driving part, a connecting part and a driven part (82), the driving part being acted by a guiding portion (60) of the first handle assembly (36), the driven part being fixedly attached to the guide bar (24), the connecting part being interposed between the driving part and the driven part and hinged to the driving part and the driven part respectively.

14. A vegetation pruning device (20) according to claim 13, wherein the connecting part comprises a first connecting rod (76) hinged to the driving part, a second connecting rod (78) having two ends hinged to the first connecting rod at one end and coupled to the main body (34) pivotally at the other end, and a third connecting rod (80) having two ends hinged to a middle portion of the second connecting rod at one end and hinged to the driven part (82) at the other end.

15. A vegetation pruning device (20) according to claim 13, wherein a torsion spring (106) having two ends is arranged between the main body (34) and the driven part (82), one end of the torsion spring being fixed with the main body, the other end of the torsion spring being fixed with the driven part.

16. A vegetation pruning device (20) according to claim 1, further comprising a limiting mechanism for preventing the guide bar (24) rotating to excess.

17. A vegetation pruning device (20) according to claim 16, wherein the limiting mechanism comprises a groove (94) formed on the main body (34) and a projected column (90) fixed with the guide bar (24), the groove comprising a first block face (100) and a second block face (102) formed at two ends of the groove respectively, the projected column being operable to couple with the first block face or the second block face.

18. A vegetation pruning device (20) according to claim 17, wherein the groove (94) is configured as waist-shaped.

19. A vegetation pruning device (20) according to claim 18, further comprising a motor bracket for supporting the motor, the projected column (90) extends from the motor bracket and penetrates the groove (94).

20. A vegetation pruning device (20) according to claim 19 further comprising three waist-shaped grooves (94) formed along a circumference at equal intervals and three projected columns (90) formed along the circumference at equal intervals, the three projected columns penetrating the three waist-shaped grooves respectively.

21. A vegetation pruning device (20) according to claim 1, wherein the second handle assembly (116; 200) comprises a second gripping portion (118; 210) and an extending portion (120; 220) having two ends, the first end (122) of the extending portion secured to the second gripping portion (118), the second end (124) of the extending portion secured to the first handle assembly (36), the locking mechanism (126; 240) being positioned between the second end of the extending portion and the first handle assembly (36).

22. A vegetation pruning device (20) according to claim 1, wherein the second handle assembly (116; 220) comprises a second gripping portion (128; 228) and an extending portion (130; 230), the second gripping portion being configured as D-shaped.

23. A vegetation pruning device (20) according to claim 1, wherein the first handle assembly (36) comprises a first gripping portion (62) having a receiving opening (152) and the locking mechanism (126) comprises a locking bracket (144) detachable received in the receiving opening.

24. A vegetation pruning device (20) according to claim 23, wherein the locking bracket (144) comprises a first matched face (154), and the first gripping portion (62) of the first handle assembly (36) comprises a second matched face (156) arranged at one side of the first handle assembly for coupling with the first matched face, the first matched face and the second matched face being matched in shape.

25. A vegetation pruning device (20) according to claim 24, wherein the locking mechanism (126) further comprises a locking knob (158) being operable to lock the first gripping portion (62) of the first handle assembly (36) between the locking bracket (144) and the locking knob.

26. A vegetation pruning device (20) according to claim 25, wherein the first gripping portion (62) of the first handle assembly (36) further comprises a third matched face (159), and the locking knob comprise a fourth matched face (166) being selective to couple with the third matched face.

27. A vegetation pruning device (20) according to claim 1, wherein the first handle assembly comprises a guiding portion (60), a C-shaped bracket (176) detachably secured on the guiding portion, and the main body (34) comprises a longitudinal slot (174), the C-shaped bracket extending outward from the longitudinal slot and moving along with the longitudinal slot, the second handle assembly (116) comprising an extending portion (124) supported on the C-shaped bracket.

28. A vegetation pruning device (20) according to claim 1, wherein a plug (177a; 177a') is arranged on one of the first handle assembly (36) and the second handle assembly (116; 200), and a socket (177b; 215) is arranged on the other of the first handle assembly and the second handle assembly, the first handle assembly being electrically coupled with the second handle assembly when the plug is connected with the socket.

29. A vegetation pruning device (20) according to claim 1, further comprising a sleeve (178) being slidably mounted on the second handle assembly (116; 200), and a cord (180) having two ends coupled with the main body (34) with one end and coupled with the sleeve with another end.

30. A vegetation pruning device (20) according to claim 29, wherein the main body (34) comprises a cliphook (182), one end of the cord (180) is fastened on the cliphook.

31. A vegetation pruning device (20) according to claim 29, wherein the sleeve (178) comprises a flexible cam clip (188) which is operable to clamp the cord (180).

32. A vegetation pruning device (20) according to claim 1, further comprising an operating assembly having a control unit (178; 203) movable mounting on the second handle assembly (116; 200) and a joint unit detachably coupling with the main body (34).

33. A vegetation pruning device (20) according to claim 32, wherein the second handle assembly (200) comprises a second gripping portion (228) and a second extending portion (124), the second extending portion comprises an outer tube (201) coupled with the second gripping portion (228) of the second handle assembly.

34. A vegetation pruning device (20) according to claim 33, wherein the joint unit comprises an inner tube (202) coupled with the outer tube (201), the inner tube comprising two ends, one end of the inner tube extending into the outer tube, the other end of the inner tube extending out of the outer tube and coupling with the main body (34).

35. A vegetation pruning device (20) according to claim 34, wherein the control unit is configured as a sleeve (203) mounted on the outer tube (201) and fixed with the inner tube (202), and the outer tube comprises a longitudinal opening (205), the sleeve being capable of sliding along the longitudinal opening with respect to the outer tube.

36. A vegetation pruning device (20) according to claim 35, wherein the main body (34) comprises an opening (260) and the inner tube (202) comprises a joint member (223) having a cooperating part (223a) selectively engaged with the opening of the main body.

37. A vegetation pruning device (20) according to claim 32, wherein the second gripping portion (118; 210) of the second handle assembly (116; 200) is configured as D-shaped.

38. A vegetation pruning device (20) according to claim 32, wherein the first handle assembly (36) comprises a first gripping portion (60) having a control switch (68) and the locking mechanism (240) comprises a first receiving chamber (244), the first gripping portion being locked in the first receiving chamber.

39. A vegetation pruning device (20) according to claim 32, wherein the locking mechanism (240) comprises a base (241) and a cover (242) coupled with the base pivotally, and a locking member (246) being selective to lock the cover on the base.

40. A vegetation pruning device (20) according to claim 39, wherein the locking member (246) comprises a locking knob (252) arranged on the cover (242), a locking pin (253) fixed on the locking knob, and a clip (255a) attached to the locking pin, and the base (241) comprises an opening (251) having an inner wall with a ramp (251a) formed thereon, the clip being operable to engage and lock with the ramp along with the rotating of the locking member.

41. A vegetation pruning device (20) according to claim 40, wherein the base (241) of the locking mechanism (240) further comprises a second receiving chamber (243) and the outer tube (201) comprises a first end connected with the second gripping portion (228) of the second handle assembly (200) and a second end received in the second receiving chamber (243) of the locking mechanism.

## Patentansprüche

1. Pflanzenschnittvorrichtung (20), die umfasst;
einen Hauptkörper (34);
ein Schneideelement (26);
eine Führungsleiste (24) zum Stützen des Schneideelements;
einen Motor (28) zum Antreiben des Schneideelements;
eine erste Griffanordnung (36);
eine zweite Griffanordnung (116; 200);
einen Verriegelungsmechanismus (126; 240) zum lösbaren Befestigen der zweiten Griffanordnung an der ersten Griffanordnung; und
einen Verbindungsmechanismus (72), der zwischen der ersten Griffanordnung und der Führungsleiste positioniert ist, **dadurch gekennzeichnet, dass** jede der ersten Griffanordnung und der zweiten Griffanordnung betrieben werden kann, um sich linear hin oder weg von der Führungsleiste zu bewegen, und dass der Verbindungsmechanismus bereitgestellt ist, um die lineare Bewegung der ersten oder der zweiten Griffanordnung in das Schwenken der Führungsleiste zu wandeln.

2. Pflanzenschnittvorrichtung (20) gemäß Anspruch 1, die weiterhin eine Stützwand (56) zum Drücken gegen ein Arbeitsstück, das geschnitten werden soll, umfasst.

3. Pflanzenschnittvorrichtung (20) gemäß Anspruch 1, die weiterhin ein U-förmiges Schutzteil (38) umfasst.

4. Pflanzenschnittvorrichtung (20) gemäß Anspruch 3, wobei das U-förmige Schutzteil (38) eine innere Kante (54) und eine U-förmige Klemmbacke (56) zum lösbaren Anbringen an der inneren Kante umfasst.

5. Pflanzenschnittvorrichtung (20) gemäß Anspruch 4, wobei die U-förmige Klemmbacke (56) eine innere Seite und eine Vielzahl von Zähnen (58a, 58b), die auf der inneren Seite angeordnet sind, umfasst.

6. Pflanzenschnittvorrichtung (20) gemäß Anspruch 4, wobei die U-förmige Klemmbacke (56) aus Stahl gemacht ist.

7. Pflanzenschnittvorrichtung (20) gemäß Anspruch 1, wobei die erste Griffanordnung (36) einen Führungsabschnitt (60) umfasst und der Hauptkörper (34) eine Griffaufnahmekammer (59) zum Aufnehmen des Führungsabschnitts umfasst, wobei die Griffaufnahmekammer eine Längsachse (X2) hat, wobei der Führungsabschnitt betrieben werden kann, um sich linear entlang der Längsachse der Griffaufnahmekammer zu bewegen.

8. Pflanzenschnittvorrichtung (20) gemäß Anspruch 7, wobei die erste Griffanordnung (36) weiterhin einen ersten Eingriffsabschnitt (62), der D-förmig konfiguriert ist, umfasst.

9. Pflanzenschnittvorrichtung (20) gemäß Anspruch 8, wobei der erste Eingriffsabschnitt (62) eine Eingriffseite (64), die als eine gerade Linie konfiguriert ist, und eine Verbindungsseite (66), die in einer gekrümmten Form konfiguriert ist, umfasst, wobei die Verbindungsseite den ersten Eingriffsabschnitt (62) an dem Führungsabschnitt (60) befestigt.

10. Pflanzenschnittvorrichtung (20) gemäß Anspruch 9, wobei ein Sicherheitsschalter (70) symmetrisch an beiden Enden der Eingriffseite (64) angebracht ist.

11. Pflanzenschnittvorrichtung (20) gemäß Anspruch 9, wobei ein Kontrollschalter (68) an dem inneren Teil der Eingriffseite (64) angeordnet ist.

12. Pflanzenschnittvorrichtung (20) gemäß Anspruch 1, wobei der Verbindungsmechanismus (72) als ein planarer Mehrfachstabmechanismus konfiguriert ist.

13. Pflanzenschnittvorrichtung (20) gemäß Anspruch 12, wobei der planare Mehrfachstabmechanismus (72) einen Antirebsteil, ein Verbindungsteil und ein angetriebenes Teil (82) umfasst, wobei auf das Antriebsteil durch einen Führungsabschnitt (60) der ersten Griffanordnung (36) eingewirkt wird, wobei das angetriebene Teil fest an der Führungsleiste (24) angebracht ist, wobei das Verbindungsteil zwischen dem Antriebsteil und dem angetriebenen Teil angeordnet ist und jeweils gelenkig an dem Antriebsteil und dem angetriebenen Teil angebracht ist.

14. Pflanzenschnittvorrichtung (20) gemäß Anspruch 13, wobei das Verbindungsteil einen ersten Verbindungsstab (76), der gelenkig an dem Antriebsteil angebracht ist, einen zweiten Verbindungsstab (78) mit zwei Enden, der an den ersten Verbindungsstab an einem Ende gelenkig angebracht ist und mit dem Hauptkörper (34) an dem anderen Ende schwenkbar gekoppelt ist, und einen dritten Verbindungsstab (80) mit zwei Enden, der an einem Mittelabschnitt des zweiten Verbindungsstabs an einem Ende gelenkig angebracht ist und an dem angetriebenen Teil (82) an dem anderen Ende gelenkig angebracht ist, umfasst.

15. Pflanzenschnittvorrichtung (20) gemäß Anspruch 13, wobei eine Torsionsfeder (106) mit zwei Enden zwischen dem Hauptkörper (34) und dem angetriebenen Teil (82) angeordnet ist, wobei ein Ende der Torsionsfeder an dem Hauptkörper befestigt ist, wobei das andere Ende der Torsionsfeder an dem angetriebenen Teil befestigt ist.

16. Pflanzenschnittvorrichtung (20) gemäß Anspruch 1, die weiterhin einen Begrenzungsmechanismus zum Verhindern, dass die Führungsleiste (24) übermäßig rotiert, umfasst.

17. Pflanzenschnittvorrichtung (20) gemäß Anspruch 16, wobei der Begrenzungsmechanismus eine Kerbe (94), die auf dem Hauptkörper (34) ausgebildet ist, und einen hervorstehende Stütze (90), die an der Führungsleiste (24) befestigt ist, umfasst, wobei die Kerbe eine erste Blockflanke (100) und eine zweite Blockflanke (102), die jeweils an zwei Enden der Kerbe ausgebildet sind, umfasst, wobei die hervorstehende Stütze betrieben werden kann, um mit der ersten Blockflanke oder der zweiten Blockflanke zu koppeln.

18. Pflanzenschnittvorrichtung (20) gemäß Anspruch 17, wobei die Kerbe (94) taillenförmig konfiguriert ist.

19. Pflanzenschnittvorrichtung (20) gemäß Anspruch 18, die weiterhin eine Motorklammer zum Stützen des Motors umfasst, wobei sich die hervorstehende Stütze (90) von der Motorklammer erstreckt und in die Kerbe (94) eindringt.

20. Pflanzenschnittvorrichtung (20) gemäß Anspruch 19, die weiterhin drei taillenförmige Kerben (94), die entlang eines Umfangs unter gleichen Intervallen ausgebildet sind, und drei hervorstehende Stützen (90), die entlang des Umfangs unter gleichen Intervallen ausgebildet sind, umfasst, wobei die hervorstehenden Stützen jeweils in die drei taillenförmigen Kerben eindringen.

21. Pflanzenschnittvorrichtung (20) gemäß Anspruch 1, wobei die zweite Griffanordnung (116, 200) einen zweiten Eingriffsabschnitt (118, 210) und einen Erstreckungsabschnitt (120; 220) mit zwei Enden umfasst, wobei das erste Ende (122) des Erstreckungsabschnitts an dem zweiten Eingriffsabschnitt (118) befestigt ist, wobei das zweite Ende (124) des Erstreckungsabschnitts an der ersten Griffanordnung (36) befestigt ist, wobei der Verriegelungsmechanismus (126; 2450) zwischen dem zweiten Ende des Erstreckungsabschnitts und der ersten Griffanordnung (36) positioniert ist.

22. Pflanzenschnittvorrichtung (20) gemäß Anspruch 1, wobei die zweite Griffanordnung (116, 220) einen zweiten Eingriffsabschnitt (128, 228) und einen Erstreckungsabschnitt (130, 230) umfasst, wobei der zweite Eingriffsabschnitt D-förmig konfiguriert ist.

23. Pflanzenschnittvorrichtung (20) gemäß Anspruch 1, wobei die erste Griffanordnung (36) einen ersten Eingriffsabschnitt (62) mit einer Aufnahmeöffnung (152) umfasst und der Verriegelungsmechanismus (126) eine Verriegelungsklammer (144) umfasst, die lösbar in der Aufnahmeöffnung aufgenommen ist.

24. Pflanzenschnittvorrichtung (20) gemäß Anspruch 23, wobei die Verriegelungsklammer (144) eine erste angepasste Flanke (154) umfasst, und wobei der erste Eingriffsabschnitt (62) der ersten Griffanordnung (36) eine zweite angepasste Flanke (156) umfasst, die an einer Seite der ersten Griffanordnung zum Koppeln mit der ersten angepassten Flanke angeordnet ist, wobei die erste angepasste Flanke und die zweite angepasste Flanke in der Form aneinander angepasst sind.

25. Pflanzenschnittvorrichtung (20) gemäß Anspruch 24, wobei der Verriegelungsmechanismus (126) weiterhin einen Verriegelungsknopf (158) umfasst, der betrieben werden kann, um den ersten Eingriffsabschnitt (62) der ersten Griffanordnung (36) zwischen der Verriegelungsklammer (144) und dem Verriegelungsknopf zu verriegeln.

26. Pflanzenschnittvorrichtung (20) gemäß Anspruch 25, wobei der erste Eingriffsabschnitt (62) der ersten Griffanordnung (36) weiterhin eine dritte angepasste Flanke (159) umfasst, und wobei der Verriegelungsknopf eine vierte angepasste Flanke (166) umfasst, die selektiv mit der dritten angepassten Flanke koppelt.

27. Pflanzenschnittvorrichtung (20) gemäß Anspruch 1, wobei die erste Griffanordnung einen Führungsabschnitt (60), eine C-förmige Klammer (876), die lösbar an dem Führungsabschnitt befestigt ist, umfasst, und wobei der Hauptkörper (34) einen Längsschlitz (174) umfasst, wobei sich die C-förmige Klammer nach außen von dem Längsschlitz erstreckt und sich entlang mit dem Längsschlitz bewegt, wobei die zweite Griffanordnung (116) einen Erstreckungsabschnitt (124) umfasst, der auf der C-förmigen Klammer gestützt wird.

28. Pflanzenschnittvorrichtung (20) gemäß Anspruch 1, wobei ein Stecker (177a; 177a') an einer von der ersten Griffanordnung (36) und der zweiten Griffanordnung (116; 200) angeordnet ist, und wobei eine Dose (177b; 215) an der anderen von der ersten Griffanordnung und der zweiten Griffanordnung angeordnet ist, wobei die erste Griffanordnung elektrisch mit der zweiten Griffanordnung gekoppelt ist, wenn der Stecker mit der Dose verbunden ist.

29. Pflanzenschnittvorrichtung (20) gemäß Anspruch 1, die weiterhin eine Hülse (178), die verrutschbar auf der zweiten Griffanordnung (116; 200) befestigt ist, und eine Leitung (180) mit zwei Enden, die mit dem Hauptkörper (34) mit einem Ende gekoppelt ist und mit dem anderen Ende mit der Hülse gekoppelt ist, umfasst.

30. Pflanzenschnittvorrichtung (20) gemäß Anspruch 29, wobei der Hauptkörper (34) einen Klemmhaken (182) umfasst, wobei ein Ende der Leitung (180) an dem Klemmhaken fixiert ist.

31. Pflanzenschnittvorrichtung (20) gemäß Anspruch 29, wobei die Hülse (178) eine flexible Sicherungsklemme (188) umfasst, die betrieben werden kann, um die Leitung (180) zu klemmen.

32. Pflanzenschnittvorrichtung (20) gemäß Anspruch 1, die weiterhin eine Betriebsanordnung mit einer Steuereinheit (178; 203), die beweglich an der zweiten Griffanordnung (116; 200) angebracht ist, und eine Gelenkeinheit, die mit dem Hauptkörper (34) lösbar koppelt, umfasst.

33. Pflanzenschnittvorrichtung (20) gemäß Anspruch 32, wobei die zweite Griffanordnung (200) einen zweiten Eingriffsabschnitt (228) und einen zweiten Erstreckungsabschnitt (124) umfasst, wobei der zweite Erstreckungsabschnitt ein äußeres Rohr (201), das mit dem zweiten Eingriffsabschnitt (228) der zweiten Griffanordnung gekoppelt ist, umfasst.

34. Pflanzenschnittvorrichtung (20) gemäß Anspruch 33, wobei die Gelenkeinheit ein inneres Rohr (202), das mit dem äußeren Rohr (201) gekoppelt ist, umfasst, wobei das innere Rohr zwei Enden umfasst, wobei sich ein Ende des inneren Rohrs in das äußere Rohr erstreckt, wobei sich das andere Ende des inneren Rohrs aus dem äußeren Rohr heraus erstreckt und mit dem Hauptkörper (34) koppelt.

35. Pflanzenschnittvorrichtung (20) gemäß Anspruch 34, wobei die Steuereinheit als eine Hülse (203), die auf dem äußeren Rohr (201) angebracht ist und an dem inneren Rohr (202) befestigt ist, konfiguriert ist, wobei das äußere Rohr eine Längsöffnung (205) umfasst, wobei die Hülse entlang der Längsöffnung in Bezug auf das äußere Rohr verrutschen kann.

36. Pflanzenschnittvorrichtung (20) gemäß Anspruch 35, wobei der Hauptkörper (34) eine Öffnung (260) umfasst und das innere Rohr (202) ein Gelenkteil (223) mit einem Kooperationsteil (223a), das selektiv in die Öffnung des Hauptkörpers eingreift, umfasst.

37. Pflanzenschnittvorrichtung (20) gemäß Anspruch 32, wobei der zweite Eingriffsabschnitt (118; 210) der zweiten Griffanordnung (116; 200) D-förmig konfiguriert ist.

38. Pflanzenschnittvorrichtung (20) gemäß Anspruch 32, wobei die erste Griffanordnung (36) einen ersten Eingriffsabschnitt (60) mit einem Steuerschalter (68) umfasst und der Verriegelungsmechanismus (240) eine erste Aufnahmekammer (244) umfasst, wobei der erste Eingriffsabschnitt in der ersten Aufnahmekammer verriegelt ist.

39. Pflanzenschnittvorrichtung (20) gemäß Anspruch 32, wobei der Verriegelungsmechanismus (240) eine Basis (241) und eine Abdeckung (242), die schwenkbar mit der Basis gekoppelt ist, und ein Verriegelungsteil (246), das die Abdeckung auf der Basis selektiv verriegelt, umfasst.

40. Pflanzenschnittvorrichtung (20) gemäß Anspruch 39, wobei das Verriegelungsteil (246) einen Verriegelungsknopf (252), der auf der Abdeckung (242) angeordnet ist, einen Verriegelungszapfen (243), der an dem Verriegelungsknopf befestigt ist, und eine Klemme (255a), die an dem Verriegelungszapfen angebracht ist, umfasst, wobei die Basis (241) eine Öffnung (251) mit einer inneren Wand mit einer Rampe (251a), die darauf ausgebildet ist, umfasst, wobei die Klemme betrieben werden kann, um zusammen mit dem Rotieren des Verriegelungsteils mit der Rampe einzugreifen und zu verriegeln.

41. Pflanzenschnittvorrichtung (20) gemäß Anspruch 40, wobei die Basis (241) des Verriegelungsmechanismus (240) weiterhin eine zweite Aufnahmekammer (243) umfasst und wobei das äußere Rohr (201) ein erstes Ende, das mit dem zweiten Eingriffsabschnitt (228) der zweiten Griffanordnung (200) verbunden ist, und ein zweites Ende, das in der zweiten Aufnahmekammer (243) des Verriegelungsmechanismus aufgenommen ist, umfasst.

## Revendications

1. Dispositif d'élagage de végétation (20) comprenant ;
un corps principal (34) ;
un élément de coupe (26) ;
une barre de guidage (24) pour supporter l'élément de coupe ;
un moteur (28) pour entraîner l'élément de coupe ;
un premier ensemble poignée (36) ;
un deuxième ensemble poignée (116 ; 200) ;
un mécanisme de verrouillage (126 ; 240) pour fixer de manière amovible le deuxième ensemble poignée au premier ensemble poignée ; et
un mécanisme de liaison (72) positionné entre le premier ensemble poignée et la barre de guidage, **caractérisé en ce que** chacun des premier ensemble poignée et deuxième ensemble poignée peut fonctionner pour se déplacer linéairement vers la barre de guidage ou loin de celle-ci, et le mécanisme de liaison est prévu pour modifier le mouvement linéaire du premier ou du deuxième ensemble poignée en pivotement de la barre de guidage.

2. Dispositif d'élagage de végétation (20) selon la revendication 1, comprenant en outre une paroi de support (56) pour se presser contre une pièce de travail devant être coupée.

3. Dispositif d'élagage de végétation (20) selon la revendication 1, comprenant en outre un élément de protection en forme de U (38).

4. Dispositif d'élagage de végétation (20) selon la revendication 3, dans lequel l'élément de protection en forme de U (38) comprend un bord interne (54) et une mâchoire en forme de U (56) destinée à être montée de manière amovible sur le bord interne.

5. Dispositif d'élagage de végétation (20) selon la revendication 4, dans lequel la mâchoire en forme de U (56) comprend un côté interne et une pluralité de dents (58a, 58b) disposées sur le côté interne.

6. Dispositif d'élagage de végétation (20) selon la revendication 4, dans lequel la mâchoire en forme de U (56) est réalisée en acier.

7. Dispositif d'élagage de végétation (20) selon la revendication 1, dans lequel le premier ensemble poignée (36) comprend une partie de guidage (60), et le corps principal (34) comprend une chambre de réception de poignée (59) pour recevoir la partie de guidage, la chambre de réception de poignée ayant un axe longitudinal (X2), la partie de guidage pouvant fonctionner pour se déplacer linéairement le long de l'axe longitudinal de la chambre de réception de poignée.

8. Dispositif d'élagage de végétation (20) selon la revendication 7, dans lequel le premier ensemble poignée (36) comprend en outre une première partie de préhension (62) qui est configurée sous forme de D.

9. Dispositif d'élagage de végétation (20) selon la revendication 8, dans lequel la première partie de préhension (62) comprend un côté de préhension (64) configuré sous forme rectiligne et un côté de liaison (66) configuré sous forme de courbe, le côté de liaison fixant la première partie de préhension (62) à la partie de guidage (60).

10. Dispositif d'élagage de végétation (20) selon la revendication 9, dans lequel un interrupteur de sécurité (70) est attaché de manière symétrique aux deux extrémités du côté de préhension (64).

11. Dispositif d'élagage de végétation (20) selon la revendication 9, dans lequel un interrupteur de commande (68) est agencé dans la partie interne du côté de préhension (64).

12. Dispositif d'élagage de végétation (20) selon la revendication 1, dans lequel le mécanisme de liaison (72) est configuré sous forme de mécanisme plan à plusieurs tiges.

13. Dispositif d'élagage de végétation (20) selon la revendication 12, dans lequel le mécanisme plan à plusieurs tiges (72) comprend une partie d'entraînement, une partie de liaison et une partie entraînée (82), la partie d'entraînement étant actionnée par une partie de guidage (60) du premier ensemble poignée (36), la partie entraînée étant attachée de manière fixe à la barre de guidage (24), la partie de liaison étant interposée entre la partie d'entraînement et la partie entraînée, et articulée à la partie d'entraînement et à la partie entraînée, respectivement.

14. Dispositif d'élagage de végétation (20) selon la revendication 13, dans lequel la partie de liaison comprend une première tige de liaison (76) articulée à la partie d'entraînement, une deuxième tige de liaison (78) ayant deux extrémités articulées à la première tige de liaison au niveau d'une extrémité et couplées au corps principal (34) en pivotement au niveau de l'autre extrémité, et une troisième tige de liaison (80) ayant deux extrémités articulées à une partie médiane de la deuxième tige de liaison au niveau d'une extrémité et articulées à la partie entraînée (82) au niveau de l'autre extrémité.

15. Dispositif d'élagage de végétation (20) selon la revendication 13, dans lequel un ressort de torsion (106) ayant deux extrémités est agencé entre le corps principal (34) et la partie entraînée (82), une extrémité du ressort de torsion étant fixée au corps principal, l'autre extrémité du ressort de torsion étant fixée à la partie entraînée.

16. Dispositif d'élagage de végétation (20) selon la revendication 1, comprenant en outre un mécanisme de limitation pour empêcher la barre de guidage (24) de tourner en excès.

17. Dispositif d'élagage de végétation (20) selon la revendication 16, dans lequel le mécanisme de limitation comprend une rainure (94) formée sur le corps principal (34) et une colonne en saillie (90) fixée à la barre de guidage (24), la rainure comprenant une première face de bloc (100) et une deuxième face de bloc (102) formées au niveau de deux extrémités de la rainure respectivement, la colonne en saillie pouvant fonctionner pour se coupler avec la première face de bloc ou la deuxième face de bloc.

18. Dispositif d'élagage de végétation (20) selon la revendication 17, dans lequel la rainure (94) est configurée sous forme resserrée.

19. Dispositif d'élagage de végétation (20) selon la revendication 18, comprenant en outre un support de moteur destiné à supporter le moteur, la colonne en saillie (90) s'étend à partir du support de moteur et pénètre dans la rainure (94).

20. Dispositif d'élagage de végétation (20) selon la revendication 19, comprenant en outre trois rainures sous forme resserré (94) formées le long d'une circonférence à des intervalles égaux et trois colonnes en saillie (90) formées le long de la circonférence à des intervalles égaux, les trois colonnes en saillie pénétrant dans les trois rainures sous forme resserrée, respectivement.

21. Dispositif d'élagage de végétation (20) selon la revendication 1, dans lequel le deuxième ensemble poignée (116; 200) comprend une deuxième partie de préhension (118 ; 210) et une partie d'extension (120 ; 220) ayant deux extrémités, la première extrémité (122) de la partie d'extension fixée à la deuxième partie de préhension (118), la deuxième extrémité (124) de la partie d'extension fixée au premier ensemble poignée (36), le mécanisme de verrouillage (126 ; 240) étant positionné entre la deuxième extrémité de la partie d'extension et le premier ensemble poignée (36).

22. Dispositif d'élagage de végétation (20) selon la revendication 1, dans lequel le deuxième ensemble poignée (116; 220) comprend une deuxième partie de préhension (128 ; 228) et une partie d'extension (130 ; 230), la deuxième partie de préhension étant configurée sous forme de D.

23. Dispositif d'élagage de végétation (20) selon la revendication 1, dans lequel le premier ensemble poignée (36) comprend une première partie de préhension (62) ayant une ouverture de réception (152) et le mécanisme de verrouillage (126) comprend un support de verrouillage (144) pouvant être reçu de manière amovible dans l'ouverture de réception.

24. Dispositif d'élagage de végétation (20) selon la revendication 23, dans lequel le support de verrouillage (144) comprend une première face correspondante (154), et la première partie de préhension (62) du premier ensemble poignée (36) comprend une deuxième face correspondante (156) agencée au niveau d'un côté du premier ensemble poignée pour se coupler avec la première face correspondante, la première face correspondante et la deuxième face correspondante se correspondent en forme.

25. Dispositif d'élagage de végétation (20) selon la revendication 24, dans lequel le mécanisme de verrouillage (126) comprend en outre un bouton de verrouillage (158) pouvant fonctionner pour verrouiller la première partie de préhension (62) du premier ensemble poignée (36) entre le support de verrouillage (144) et le bouton de verrouillage.

26. Dispositif d'élagage de végétation (20) selon la revendication 25, dans lequel la première partie de préhension (62) du premier ensemble poignée (36) comprend en outre une troisième face correspondante (159) et le bouton de verrouillage comprend une quatrième face correspondante (166) étant sélective pour se coupler avec la troisième face correspondante.

27. Dispositif d'élagage de végétation (20) selon la revendication 1, dans lequel le premier ensemble poignée comprend une partie de guidage (60), un support en forme de C (176) fixé de manière amovible sur la partie de guidage, et le corps principal (34) comprend une fente longitudinale (174), le support en forme de C s'étendant vers l'extérieur à partir de la fente longitudinale et se déplaçant le long de la fente longitudinale, le deuxième ensemble poignée (116) comprenant une partie d'extension (124) supportée sur le support en forme de C.

28. Dispositif d'élagage de végétation (20) selon la revendication 1, dans lequel une fiche (177a; 177a') est agencée sur l'un parmi le premier ensemble poignée (36) et le deuxième ensemble poignée (116 ; 200), et une prise (177b ; 215) est agencée sur l'autre parmi le premier ensemble poignée et le deuxième ensemble poignée, le premier ensemble poignée étant couplé électriquement au deuxième ensemble poignée lorsque la fiche est reliée à la prise.

29. Dispositif d'élagage de végétation (20) selon la revendication 1, comprenant en outre un manchon (178) étant monté en coulissement sur le deuxième ensemble poignée (116 ; 200), et une corde (180) ayant deux extrémités couplée au corps principal (34) en une extrémité et couplée au manchon en une autre extrémité.

30. Dispositif d'élagage de végétation (20) selon la revendication 29, dans lequel le corps principal (34) comprend un crochet d'arrêt (182), une extrémité de la corde (180) est rattachée au crochet d'arrêt.

31. Dispositif d'élagage de végétation (20) selon la revendication 29, dans lequel le manchon (178) comprend une pince à came flexible (188) qui peut fonctionner pour serrer la corde (180).

32. Dispositif d'élagage de végétation (20) selon la revendication 1, comprenant en outre un ensemble de fonctionnement comportant une unité de commande (178 ; 203) montée en mouvement sur le deuxième ensemble poignée (116 ; 200) et une unité d'assemblage couplée de manière amovible au corps principal (34).

33. Dispositif d'élagage de végétation (20) selon la revendication 32, dans lequel le deuxième ensemble poignée (200) comprend une deuxième partie de préhension (228) et une deuxième partie d'extension (124), la deuxième partie d'extension comprend un tube externe (201) couplé à la deuxième partie de préhension (228) du deuxième ensemble poignée.

34. Dispositif d'élagage de végétation (20) selon la revendication 33, dans lequel l'unité d'assemblage comprend un tube interne (202) couplé au tube externe (201), le tube interne comprenant deux extrémités, une extrémité du tube interne s'étendant dans le tube externe, l'autre extrémité du tube interne s'étendant à l'extérieur du tube externe et se couplant avec le corps principal (34).

35. Dispositif d'élagage de végétation (20) selon la revendication 34, dans lequel l'unité de commande est configurée sous la forme d'un manchon (203) monté sur le tube externe (201) et fixé au tube interne (202), et le tube externe comprend une ouverture longitudinale (205), le manchon étant capable de coulisser le long de l'ouverture longitudinale par rapport au tube externe.

36. Dispositif d'élagage de végétation (20) selon la revendication 35, dans lequel le corps principal (34) comprend une ouverture (260) et le tube interne (202) comprend un élément d'assemblage (223) ayant une partie de coopération (223a) engagée sélectivement avec l'ouverture du corps principal.

37. Dispositif d'élagage de végétation (20) selon la revendication 32, dans lequel la deuxième partie de préhension (118 ; 210) du deuxième ensemble poignée (116 ; 200) est configurée sous forme de D.

38. Dispositif d'élagage de végétation (20) selon la revendication 32, dans lequel le premier ensemble poignée (36) comprend une première partie de préhension (60) ayant un interrupteur de commande (68) et le mécanisme de verrouillage (240) comprend une première chambre de réception (244), la première partie de préhension étant verrouillée dans la première chambre de réception.

39. Dispositif d'élagage de végétation (20) selon la revendication 32, dans lequel le mécanisme de verrouillage (240) comprend une base (241) et un couvercle (242) couplé à la base en pivotement, et un élément de verrouillage (246) étant sélectif pour verrouiller le couvercle sur la base.

40. Dispositif d'élagage de végétation (20) selon la revendication 39, dans lequel l'élément de verrouillage (246) comprend un bouton de verrouillage (252) disposé sur le couvercle (242), une broche de verrouillage (253) fixée sur le bouton de verrouillage, et une pince (255a) attachée à la broche de verrouillage, et la base (241) comprend une ouverture (251) ayant une paroi interne avec une rampe (251 a) formée sur celle-ci, la pince pouvant fonctionner pour s'engager et se verrouiller avec la rampe avec la rotation de l'élément de verrouillage.

41. Dispositif d'élagage de végétation (20) selon la revendication 40, dans lequel la base (241) du mécanisme de verrouillage (240) comprend en outre une deuxième chambre de réception (243) et le tube externe (201) comprend une première extrémité reliée à la deuxième partie de préhension (228) du deuxième ensemble poignée (200) et une deuxième extrémité reçue dans la deuxième chambre de réception (243) du mécanisme de verrouillage.
